# EUROPEAN PATENT APPLICATION

(11) **EP 1 701 475 A1**
(43) Date of publication of application: **13.09.2006**
(21) Application number: 06004022.7
(22) Date of filing: 28.02.2006
(51) Int. Cl.: H04L 12/28, H04L 29/08

(54) **Home appliance control in a virtual private network environment**

(30) Priority: 01.03.2005 JP 2005056680; 01.03.2005 JP 2005056681
(71) Applicant: OMRON CORPORATION, Kyoto-shi, Kyoto 600-8530 (JP)
(72) Inventor: Nakamura, Akihiko, Shiokoji- Shimogyo- Kyoto Kyoto 600-8530 (JP); Ombe, Takaaki, Shiokoji- Shimogyo- Kyoto Kyoto 600-8530 (JP)
(74) Representative: Vossius & Partner

(57) **Abstract**

A protocol converting apparatus (communication relayapparatus)relayscommunicationsbetween acellular phone and an specific network (VPN) so that the cellular phone is connected to the VPN in which communication is performed by using an independently set dedicated address. The protocol converting apparatus has a data communication section that performs data communication with the cellular phone, a VPN connecting section that performs data communication with the specific network (VPN), a protocol converting section that converts a communication protocol of communication data, and an address authentication specifying section that specifies a destination of the communication data.

## Description

The present invention relates to a communication relay apparatus, a communication control method and a computer readable medium, which, when a communication terminal such as a cellular phone performs data communication through a specific network having a dedicated address such as a VPN (Virtual Private Network), are used so that the communication terminal connects to the specific network, and to a communication systemhaving the communication relay apparatus. The present invention also relates to an electrical apparatus control apparatus, an electrical apparatus control system, an electrical apparatus control method and a computer readable medium, in which, in a self security system through wireless connection (full wireless connection), communication between a main controller of the system and an electrical apparatus disposed in a management region of the system is mediated so as to manage and control the electrical apparatus.

In the related art, in a place, such as a house, a work place and a school, where a person stays for a predetermined time (hereinafter, simply referred to as "house"), various methods of managing security have been suggested. For example, a security system has been already put to practical use in which various sensors are provided in a house or in the periphery of the house so as to monitor the states of the house inside and outside. Alternatively, in such a security system, a camera for imaging the states of the house inside and outside may be provided.

In general, the security system has a controller for controlling a plurality of sensors provided in the house inside and outside, the controller being connected to the individual sensors for communication. The controller is configured to perform predetermined security management on the basis of the detection results of the sensors.

Further, in such a security system, normally, the controller performs wire communication with the sensors or performs wireless communication with the sensors by using a specified low-power radio communication system (a specified low-power radio communication).

Moreover, in other security systems, there is a case in which cameras are provided so as to image the states of the house inside and outside. The cameras perform wire or wireless communication with the controller. Image data imaged by the camera has a large data amount, and thus, when the camera performs wireless communication with the controller, a wireless communication system (wireless LAN) based on IEEE 802.11b standard or the like is used. However, the sensors other than the cameras perform wire communication with the controller (for example, refer to JP-A-2004-128821 and JP-A-2004-194111).

In addition, in such a security system, for example, as described in JP-A-2004-194111, an illumination device, a heating apparatus, and various appliances are connected to a server of the system through interfaces. In the security system, a cellular phone can access the system from the outside. Then, the states of these apparatuses can be monitored from an outing destination by the cellular phone, and through the operation of the cellular phone, apparatuses in the security region are controlled. When abnormality is detected by a sensor or the like installed in the security region, a mail indicating that the abnormality has occurred can be sent to the cellular phone. Moreover, control such as turning-on and turning-off of various electrical apparatuses or the like can be performed.

However, when the controller performs wire communication with the sensors or the cameras, since communication lines are provided to places where the sensors or the cameras are installed, the places where the sensors or the cameras are installed are limited. For this reason, the controller preferably performs wireless communication with the sensors or the cameras.

As communication systems by the wireless communication, a specified low-power radio communication system, a wireless LAN (local area network) communication system can be exemplified.

In case of constructing the above-described security system, when the system is introduced, the sensors and the cameras which are disposed so as to primarily monitor the management region are adjusted according to the specification of the system, and then are mounted in the management region. For this reason, each sensor or camera has a communication section according to the communication system such as the specified low-power system or the wireless LAN system, thereby performing smooth information communication with the main controller.

However, as for various electrical apparatuses such as an illumination device, an air conditioning apparatus, and a television, which are connected to the security system, in general, there are many cases in which the electrical apparatuses installed in the house prior to the system construction are incorporated into the system. When an electrical apparatus with a built-in wireless communication section according to the system specification is used, smooth information communication through wireless communication with the main controller can be performed. In this case, however, an electrical apparatus having the specification needs to be newly purchased, and thus costs are increased. Further, the wireless communication section described above may be separately mounted on the ready-made electrical apparatus. In this case, however, it takes much time to work, and thus the user himself hardly performs this work.

Furthermore, in order to put the above security system to practical use, Internet which anyone can simply access may be used so as to perform information communication between an external communication terminal such as a cellular phone, and the system. In this case, however, communication data may leak outside, and an outsider may destroy communication data. As described above, since the security system is a system for protecting the security of the house, when communication data leaks outside or is destroyed, severe damage may occur.

In JP-A-2004-32364, a technology has been described in which a safety and comfort Internet environment is provided in a network system using Internet so as to maintain a security of a system user.

However, the technology described in JP-A-2004-32364 is still the same as the related art in that the Internet, which anyone can access, is used. Accordingly, the technology is insufficient as a measure for preventing leakage and destruction of communication data.

Further, a technology has been proposed in which a dedicated address is allocated in a specified network within a network that anyone can access, so as to perform communication. In such a technology, a specific network that only a terminal with the dedicated address allocated thereto can access is formed. As an example of such an specific network, a VPN (Virtual Private Network) and the like can be exemplified.

To each of apparatuses, terminals, systems, and the like, which can be connected to the specific network, a dedicated address which can be used only in the corresponding network is allocated, such that other terminals cannot easily intrude into the network. That is, though passing through Internet, the specific network such as the VPN is a network technology in which bases are connected to one another like a leased line, thereby realizing a safety communication. This is called a virtual private network or a virtual network. For this reason, in view of security, more excellent network environment can be constructed.

Moreover, at the time of the connection to the specific network, in case of a terminal such as a personal computer (PC), a specific driver is installed.

However, unlike the PC, an existing cellular phone does not have the configuration in which the driver can be installed, and thus the dedicated address cannot be specified. Accordingly, an access to the system or the like connected to the specific network (that is, "router pass") cannot be performed. In addition, since the communication protocol of the communication terminal, for example, the cellular phone, is HTTP (HyperText Transfer Protocol), for the connection to the VPN described above, a protocol conversion needs to be performed on data input from the cellular phone, and a communication destination having a VPN-dedicated address needs to be specified. However, at present time, as regards the communication terminal, for example, the cellular phone, such a communication technology has not been proposed.

An object of the invention is to provide a communications relay apparatus, a communication control method and a computer readable medium, which enable a connection of a communication terminal such as a cellular phone to a specific network, and a communication system which has such a communications relay apparatus and can easily set a network connection in a management system.

Furthermore, an object of the invention to provide an electrical apparatus controller, an electrical apparatus control system, an electrical apparatus control method and a computer readable medium, which enables smooth information communication between an electrical apparatus and a main controller so as to reliably control the electrical apparatus in a security system using wireless communication or the like.

In some implementations, a communication relay apparatus of the invention for relaying a communication between a communication terminal and at least one specific network in which a communication using an independently set dedicated address is performed, said communication relay apparatus comprising: a communication section for performing data communication with the communication terminal; a network connecting section for performing data communication with a specific network terminal that belongs to the specific network; and a communication relay processing section, wherein when the communication section receives an instruction to transmit data to the specific network terminal, the communication relay processing section controls the network connecting section to transmit a content of the instruction to the specific network terminal through the specific network, and the communication relayprocessing section controls the communication section to transmit information to the communication terminal, the information being received by the network connecting section from the specific network terminal.

Here, the "specific network" independently allocates a network-dedicated address to each of connectable apparatuses, systems, terminals, and the like so as to perform communications. As an example, a VPN can be exemplified. Since a user who does not have the dedicated address or a person who does not know a password or the like cannot access the specific network, a safety communication can be established on the specific network.

For this reason, the specific network is excellent when a management system such as a security system for protecting a house from an intrusion of an outsider performs data communication with an external communication terminal, for example.

On the other hand, when a LAN is constructed in a house or a company, and the LAN is connected to, for example, Internet through a router, one IP address is basically set for the router. That is, since it is impossible to specify a terminal belonging to the LAN by the IP address through Internet, a direct communication with the terminal belonging to the LAN from the outside cannot be performed.

Here, when the specific network is used, the dedicated address, which is independently set in the network, can be set for a terminal to be connected through the router. That is, an external terminal belonging to the specific network can perform communication with the terminal belonging to a specified LAN.

However, for example, when the connection to the specific network is performed by using the communication terminal such as the cellular phone, an access to the terminal connected to the specific network or the like is impossible, as long as the dedicated address is not installed.

Therefore, the communication relay apparatus relays the communication between the communication terminal and the specific network so as to solve the above-described problem.

In order to solve the above-described problem, when the communication section receives a data transmission instruction to transmit data to the specific network terminal, the communication relay processing section controls the network connecting section to transmit a content of the data transmission instruction to the specific network terminal through the specific network, and controls the communication section to transmit information to the communication terminal, the information being received by the network connecting section from the specific network terminal.

According to this configuration, with the connection of the communication terminal such as the cellular phone to the specific network (for example, the VPN or the like) which performs communication using the dedicated address, the data communication with a communication destination (that is, the specific network terminal) of the management system having the dedicated address or the like, can be performed. As a result, the data communication between the communication terminal and the management system can be smoothly performed.

In the communication relay apparatus of the invention, the specific network is a VPN (virtual private network), and the network connecting section is a VPN connecting section being connected to the VPN.

As for the communication using the VPN, an encrypted communication is performed. For this reason, according to the above-described configuration, a safety communication can be established.

The communications relay apparatus of the invention further comprises: a storage for storing the dedicated address in association with identification information of the communication terminal which is connectable to the dedicated address.

According to this configuration, a destination specifying section can select a communication terminal to which data is to be transmitted, on the basis of the information stored in the storage, such that data transmitted from a person having the dedicated address can be transmitted to the communication terminal. Moreover, as the identification information of the communication terminal, for example, IP address of the communication terminal and the like can be exemplified.

In the communications relay apparatus of the invention, the communication section performs the data communication with the communication terminal by using a first communication protocol, the network connecting section performs the data communication with the specific network terminal by using a second communication protocol which is different from the first communication protocol, and the communication relay apparatus further comprises: a protocol converting section for performing a protocol conversion between the first communication protocol and the second communication protocol.

According to this configuration, even when the communication protocol of the communication terminal and a communication protocol of data on the specific network are different from each other, since the protocol converting section performs the protocol conversion, the data communication can be performed.

In the communications relay apparatus of the invention, the first communication protocol is HTTP (HyperText Transfer Protocol).

In general, the cellular phone is connected to Internet by using the HTTP so as to acquire information from other terminals connected to Internet. For this reason, according to the above-described configuration, when the communication terminal is the cellular phone, through the protocol conversion, the connection to the specific network can be performed. Accordingly, the data communication with other system such as the security system, that is connected to the specific network can be performed.

In some implementations, a communication system of the invention comprises: the communication relay apparatus of the invention; and a main controller as the specific network terminal, the main controller controlling a management system that controls at least one electrical apparatus installed in a predetermined region, wherein the communication relay apparatus and the main controller are connected to each other through the specific network in which communication using the dedicated address is performed.

In the communication system of the invention, since the communication relay apparatus described above relays the data communication between the management system and the communication terminal, the problem of "router pass" can be solved, and thus the data communication can be smoothly performed.

Further, in the communication systemof the invention, since the communication relay apparatus that enables the data communication between the management system and the communication terminal is provided, data amount which should be temporarily stored in a server or the like on the external network such as Internet can be reduced. For this reason, at the time of maintenance and management of the communication system, costs for the data communication terminal can be reduced, and thus running costs of the system can be reduced. In addition, a direct communication to a target apparatus can be performed, and thus a server does not need to be provided therebetween. As a result, maintenance costs can be reduced.

In some implementations, a communication control method of the invention comprises: performing data communication with a communication terminal; performing data communication with a specific network terminal that belongs to a specific network in which communication using an independently set dedicated address is performed; when a data transmission instruction to transmit data to the specific network terminal is received, transmitting a content of the data transmission instruction to the specific network terminal through the specific network; and transmitting information received from the specific network terminal to the communication terminal.

According to this configuration, the problem of "router pass" generated when the communication terminal performs data communication with the specific network terminal belonging to the specific network can be solved, and thus the communication terminal can be connected to the specific network.

That is, according to this configuration, with the connection of the communication terminal such as the cellular phone to the specific network (for example, the VPN or the like) which performs communication using the dedicated address, the data communication with a communication destination (that is, the specific network terminal) of the management system having the dedicated address or the like, can be performed. As a result, the data communication between the communication terminal and the management system can be smoothly performed.

Moreover, the communication control in the communication relay apparatus may be implemented by a computer. In this case, a computer readable recording medium, in which, by allowing the computer to function as the individual sections, a control program is recorded so as to implement the communication relay apparatus by the computer, also falls within the scope of the invention.

In some implementations, a computer readable medium having a program including instructions for permitting a computer to perform communication relay, said instructions comprising: performing data communication with a communication terminal; performing data communication with a specific network terminal that belongs to a specific network in which communication using an independently set dedicated address is performed; when a data transmission instruction to transmit data to the specific network terminal is received, transmitting a content of the data transmission instruction to the specific network terminal through the specific network; and transmitting information received from the specific network terminal to the communication terminal.

As described above, the communication relay apparatus of the invention comprises: a communication section for performing data communication with a communication terminal; a network connecting section for performing data communication with a specific network terminal that belongs to a specific network in which communication using an independently set dedicated address is performed; and a communication relay processing section, wherein when the communication section receives a data transmission instruction to transmit data to the specific network terminal, the communication relay processing section controls the network connecting section to transmit a content of the data transmission instruction to the specific network terminal through the specific network, and controls the communication section to transmit information to the communication terminal, the information being received by the network connecting section from the specific network terminal.

According to the invention, with the connection of the communication terminal such as the cellular phone to the specific network (for example, the VPN or the like) which performs communication using the dedicated address, the data communication with a communication destination (that is, the specific network terminal) of the management system having the dedicated address or the like can be performed. As a result, the data communication between the communication terminal and the management system can be smoothly performed.

Furthermore, the inventors have carefully studied the above-described problems, and have paid attention to the fact that various electrical apparatuses such as illumination device, a cooling and heating appliance (air conditioning apparatus) and a television can be operated remotely by using a remote control which irradiates infrared rays. Then, the inventors have found that, in a security system using wireless communication by a specified low-power system, smooth information communication between various electrical apparatuses and a main controller can be performed through the control of the electrical apparatus by infrared rays and information communication with the main controller by the specified low-power system.

In some implementations, an electrical apparatus controller of the invention which is used in a management system having a main controller capable of communicating with an external apparatus and at least one electrical apparatus to be controlled by the main controller, the main controller being connected to the at least one electrical apparatus through wireless connection, and the main controller controlling an operation of the electrical apparatus on the basis of transmission information transmitted from the external apparatus, and which relays information communication between the main controller and the electrical apparatus, the electrical apparatus controller includes: a communication section that receives information from the main controller through the wireless communication; and an infrared ray irradiating section that, on the basis of the information received by the communication section, irradiates infrared rays onto the electrical apparatus so as to operate the electrical apparatus.

The electrical apparatus controller according to the invention is used in a management system such as a security system in which the individual devices and apparatuses are connected through wireless connection, and the main controller can remotely control the operations of the electrical apparatuses on the basis of the transmission information transmitted from the external apparatus. The electrical apparatus controller mediates the information communication between the main controller and the electrical apparatus.

Moreover, as the external apparatus, for example, a communication terminal such as a cellular phone which can communicate with the main controller through the external network such as Internet, or a sensor that is disposed in a region to be managed by the management system can be exemplified. In this case, the electrical apparatus controller allows the main controller to remotely control the operations of the electrical apparatuses on the basis of the test result of the sensor or operation information input from the communication terminal.

Then, in the electrical apparatus controller, the communication section receives the information from the main controller through wireless communication, and the infrared ray irradiating section irradiates, on the basis of the information received by the communication section, infrared rays onto the electrical apparatus so as to operate the electrical apparatus. Moreover, as a method of wireless communication by the communication section, a wireless system such as a specified low-power system, a 802.15 wireless system such as Bluetooth (Registered Trademark), or a 802.11 wireless system can be exemplified.

According to this configuration, since the infrared ray irradiating section is provided, by infrared rays having been used as a remote control of the electrical apparatus in the related art, the electrical apparatus can be operated remotely. Further, since the communication section can perform wirelesscommunication with the main controller, information regarding how to control the electrical apparatus can be received from the main controller. For this reason, in the management system such as a security system using wireless communication,the information communication between the electrical apparatus and the main controller can be smoothly performed, and the electrical apparatus can be reliably controlled.

That is, the information communication between the electrical apparatus and the main controller can be smoothly performed by using the remote control of the ready-made electrical apparatus, without newly incorporating the communication section with the main controller into the electrical apparatus or purchasing a dedicated electrical apparatus having the built-in communication section. Further, by using the electrical apparatus controller according to the invention, the electrical apparatus can be incorporated into the management system by simple set ups without time-consuming work.

Moreover, when a plurality of electrical apparatuses are provided, the electrical apparatus controller may further have an instructing section that outputs instruction information including identification information of a corresponding electrical apparatus and information regarding an operation content thereof on the basis of the information received by the communication section. In this case, it is preferable that the infrared ray irradiating section irradiate, on the basis of the instruction information output from the instructing section, infrared rays onto the correspond ing electrical apparatus so as to operate the corresponding electrical apparatus. According to this configuration, when the plurality of electrical apparatuses are provided, it is possible to make a target electrical apparatus perform a target operation.

In the electrical apparatus controller of the invention, it is preferable that the communication section receive the information from the main controller through wireless communication using a specified low-power system.

The wireless communication by the specified low-power system has come into wide use as a communication system among various types of general-use sensors. For this reason, a communication apparatus using the specified low-power system has advantages such as the simple configuration and ease of installment or setup. Further, the wireless communication by the specified low-power system has advantages such as fast establishment of communication among the individual terminals and long communication range, as compared with a wireless communication by a wireless LAN system. In addition, the wireless communication by the specified low-power system can be unidirectional or bidirectional, and can establish communication only when data transmission and reception is performed. Therefore, power consumption can be reduced.

According to the above-described configuration, the configuration of the communication section can be simplified, and the setup of the apparatus can be easily performed. Further, power consumption of information communication can be reduced.

In the electrical apparatus controller of the invention, it is preferable that the communication section transmit the information to the main controller, and the information transmitted by the communication section include infrared ray irradiation information indicating that infrared rays are irradiated onto the electrical apparatus.

According to this configuration, the main controller is noticed that infrared rays are normally irradiated. Then, for example, when the main controller does not receive the notice in predetermined time, it is judged that infrared rays are not irradiated due to some abnormality, and then a control can be performed so that the instruction information is output again. Accordingly, the electrical apparatus can be more reliably operated.

The electrical apparatus controller of the invention may further include a detecting section that detects an environmental state at a place where the electrical apparatus is disposed. In this case, it is preferable that, on the basis of the detection result by the detecting section, the communication section transmit information regarding whether or not the electrical apparatus is operating.

According to this configuration, for example, the detecting section can detect a change in environmental state when power is turned on in the electrical apparatus, and can give notice of the result to the main controller of the security system. Accordingly, it is possible to confirm that the electrical apparatus is reliably operated by the infrared ray irradiating section.

Moreover, as "the environmental states" detected by the detecting section, for example, temperature, illuminance, humidity, air cleanliness, sound volume, and the like can be exemplified. However, these states are not intended to limit the invention. All possible states used as indexes representing environmental states are included.

In the electrical apparatus controller of the invention, it is preferable that the detecting section be a temperature detecting section that detects a temperature.

According to this configuration, when the electrical apparatus is an air conditioning apparatus, a change in temperature of a room or the like at the time of turning on/off the air conditioning apparatus can be detected by the temperature detecting section, and the result can be noticed to the main controller of the security system. Accordingly, it is possible to confirm that the electrical apparatus can be reliably operated by the infrared ray irradiating section.

In the electrical apparatus controller of the invention, it is preferable that the detecting section be an illuminance detecting section that detects illuminance.

According to this configuration, when the electrical apparatus is an illumination apparatus or a television, a change in illuminance of a room or the like at the time of turning on/off the illumination apparatus can be detected by the illuminance detecting section, and the result can be noticed to the main controller of the security system. Accordingly, it is possible to confirm that the electrical apparatus can be reliably operated by the infrared ray irradiating section.

In some implementations, an electrical apparatus control system of the invention includes the electrical apparatus controller described above, and a main controller that controls the electrical apparatus controller.

In some implementations, an electrical apparatus control method of the invention in an electrical apparatus controller which is used in a management system having a main controller capable of communicating with an external apparatus and at least one electrical apparatus to be controlled by the main controller, the main controller being connected to at least one electrical apparatus through wireless connection, and the main controller controlling an operation of the electrical apparatus on the basis of transmission information transmitted from the external apparatus, and which relays information communication between the main controller and the electrical apparatus, the electrical apparatus control method includes: receiving information from the main controller through wireless communication; and irradiating infrared rays so as to operate the electrical apparatus on the basis of the received information.

According to the electrical apparatus control method, a communication section which can perform wireless communication with the main controller receives the information regarding how to control the electrical apparatus from the main controller, and an infrared ray irradiating section remotely operates the electrical apparatus on the basis of the information by using infrared rays used as the remote control of the electrical apparatus in the related art. For this reason, according to this method, in the management system, such as a security system using wireless communication, information communication between the electrical apparatus and the main controller can be smoothly performed, and the electrical apparatus can be reliably controlled.

Moreover, the control of the electrical apparatus in the electrical apparatus controller may be implemented by a computer. In this case, a computer readable recording medium, in which, by allowing the computer to function as the individual sections, a control program is recorded so as to implement the electrical apparatus controller by the computer, also falls within the scope of the invention.

In some implementations, an electrical apparatus control program in the electrical apparatus described above is provided, which allows the computer to function as individual sections. In addition, in some implementations, there is provided a computer readable recording medium in which the electrical apparatus control program described above is recorded.

As described above, the electrical apparatus controller according to the invention includes the communication section that receives the information from the main controller through wireless communication, and the infrared ray irradiating section that, on the basis of the information received by the communication section, irradiates infrared rays onto the electrical apparatus so as to operate the electrical apparatus.

According to this configuration, since the infrared ray irradiating section is provided, the electrical apparatus can be operated remotely by infrared rays used as the remote control of the electrical apparatus in the related art. Further, since the communication section, which can be in wireless communication with the main controller, is provided, the information regarding how to control the electrical apparatus can be received from the main controller. For this reason, in the management system, such as a security system using wireless communication or the like, the information communication between the electrical apparatus and the main controller can be smoothly performed, and the electrical apparatus can be reliably controlled.

Fig. 1 is a block diagram showing an essential configuration of a protocol control apparatus in accordance with an embodiment of the invention.

Fig. 2 is a block diagram showing an essential configuration of a security system in accordance with an embodiment of the invention.

Fig. 3 is a block diagram showing an essential configuration of a monitoring system in accordance with an embodiment of the invention.

Fig. 4 is a block diagram showing an essential configuration of a sensor section in accordance with an embodiment of the invention.

Fig. 5 is a block diagram showing an essential configuration of a camera section in accordance with an embodiment of the invention.

Fig. 6 is a block diagram showing an essential configuration of an actuator section in accordance with an embodiment of the invention.

Fig. 7 is a block diagram showing an essential configuration of a main controller in accordance with an embodiment of the invention.

Fig. 8 is a block diagram showing an essential configuration of an appliance control section in accordance with an embodiment of the invention.

Fig. 9 is an example of a data table stored in a storage device of the protocol converting apparatus as shown in Fig. 1.

Fig. 10 is a block diagram showing a flow (data transmission and reception) when various kinds of setups and registration of the security system are performed, in accordance with an embodiment of the invention.

Fig. 11 is a block diagram showing a flow (data transmission and reception) when various kinds of setups and registration of the security system are performed, in accordance with an embodiment of the invention.

Fig. 12 is a block diagram showing a flow (data transmission and reception) when various kinds of setups and registration of the security system are performed, in accordance with an embodiment of the invention.

Fig. 13 is a block diagram showing a flow (data transmission and reception) when various kinds of setups and registration of the security system are performed, in accordance with an embodiment of the invention.

Fig. 14 is a block diagram showing a flow (data transmission and reception) when various kinds of setups and registration of the security system are performed, in accordance with an embodiment of the invention.

Fig. 15 is a block diagram showing a flow (data transmission and reception) when various kinds of setups and registration of the security system are performed, in accordance with an embodiment of the invention.

Fig. 16 is a block diagram showing a flow (data transmission and reception) when various kinds of setups and registration of the security system are performed, in accordance with an embodiment of the invention.

Fig. 17 is a block diagram showing a flow (data transmission and reception) when various kinds of setups and registration of the security system are performed, in accordance with an embodiment of the invention.

Fig. 18 is a perspective view showing an appearance of an appliance controller constituting the appliance control section as shown in Fig. 8.

Fig. 19 is a view showing a frame format of a configuration of an operating section provided in the appliance controller as shown in Fig. 18.

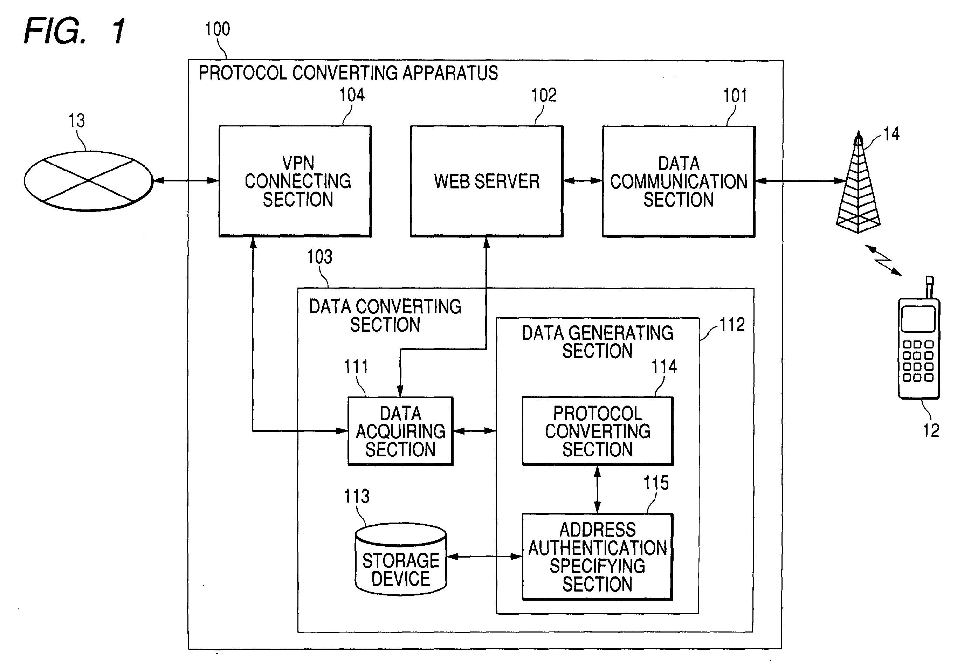

An embodiment of the invention will now be described with reference to Figs. 1 to 17. In this embodiment, a so-called home security system which monitors a security of a house is exemplified as an example of a communication system of the invention. Hereinafter, the configuration of the security system will be described.

The overall configuration of the security system, and further, a sensor section and an appliance control section of the system will be described. Further, as an electrical apparatus controller constituting the appliance control section, an appliance controller which relays information communication between a main controller and an appliance (electrical apparatus) in the home security system, is described. However, the invention is not limited to this configuration.

Moreover, a monitoring system (management system) in the security system according to this embodiment is connected to a VPN (Virtual Private Network) serving as a specific network. For this reason, in this embodiment, in order to perform information communication between a cellular phone (communication terminal) connected to Internet by using a communication protocol HTTP, and the monitoring system, a protocol converting apparatus (communication relay apparatus) that performs protocol conversion and specification of a destination having a dedicated address in the VPN is provided in an external network. In this embodiment, such a communications relay apparatus will be described in detail.

### [A: Configuration of Security System]

First, overall configuration of the security system will be described.

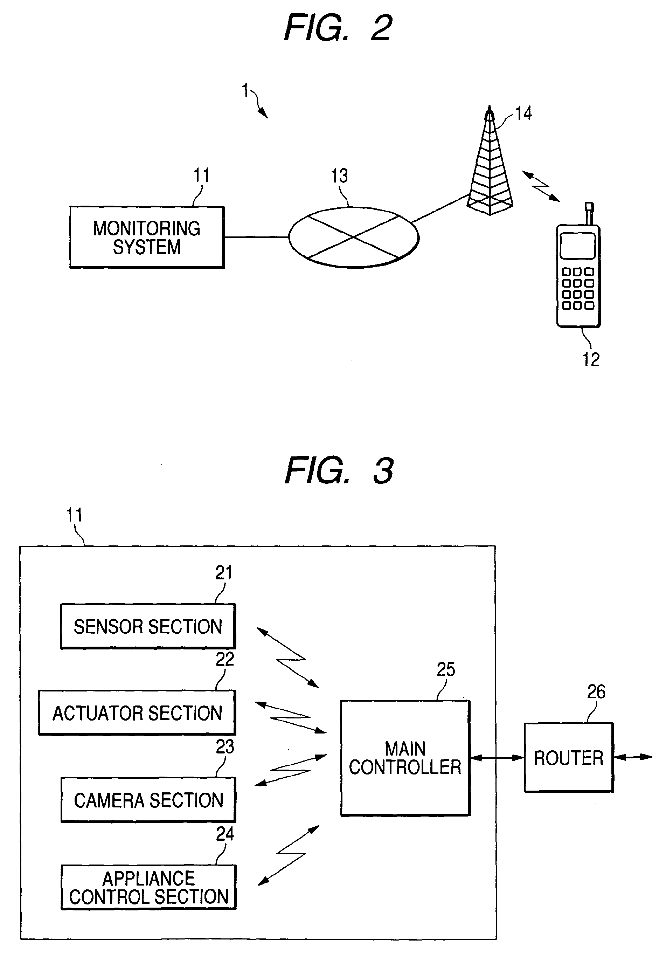

Fig. 2 is a schematic view showing a schematic configuration of a security system according to the embodiment of the invention. As shown in Fig. 2, a security system (communication system) 1 has a monitoring system (management system) 11 and a cellular phone (communication terminal) 12. The monitoring system 11 and the cellular phone 12 are connected to each other for communication through an external network 13 (Internet). Further, in this embodiment, the monitoring system 11 is connected to the VPN (specific network) in Internet, and information communication is performed in the VPN. That is, the monitoring system 11 is a specific network terminal belonging to the specific network.

The monitoring system 11 monitors various states in a region (security region) where a security of the house inside and outside is provided. Further, the cellular phone 12 is a cellular phone which is registered in advance by a user of the monitoring system 11. That is, when the monitoring system 11 judges that any abnormality occurs in the security region, the security system 1 gives notice of the abnormality to the cellular phone 12 that is previously registered by the user, through the external network 13. Accordingly, the user can be informed that the abnormality occurs in the security region. Hereinafter, a concrete description will be given.

### [A-1: Monitoring System]

Fig. 3 is a block diagram showing a schematic configuration of the monitoring system (management system) 11 in the security system (communication system) 1. As shown in Fig. 3, the monitoring system 11 has a sensor section 21, a camera section 23, an actuator section 22, an appliance control section 24, and a main controller 25.

### (Sensor section)

The sensor section 21 detects an abnormal state such as trespass, and issues a warning. Specifically, the sensor section 21 monitors the state of the security region and detects a change in state. Further, the sensor section 21 detects the change in state, judges whether or not the abnormal state occurs, and when the abnormal state occurs, gives notice of the abnormality to the main controller 25. Moreover, abnormality is the general term for the abnormal states detected by the sensor section 21, such as fire and trespass.

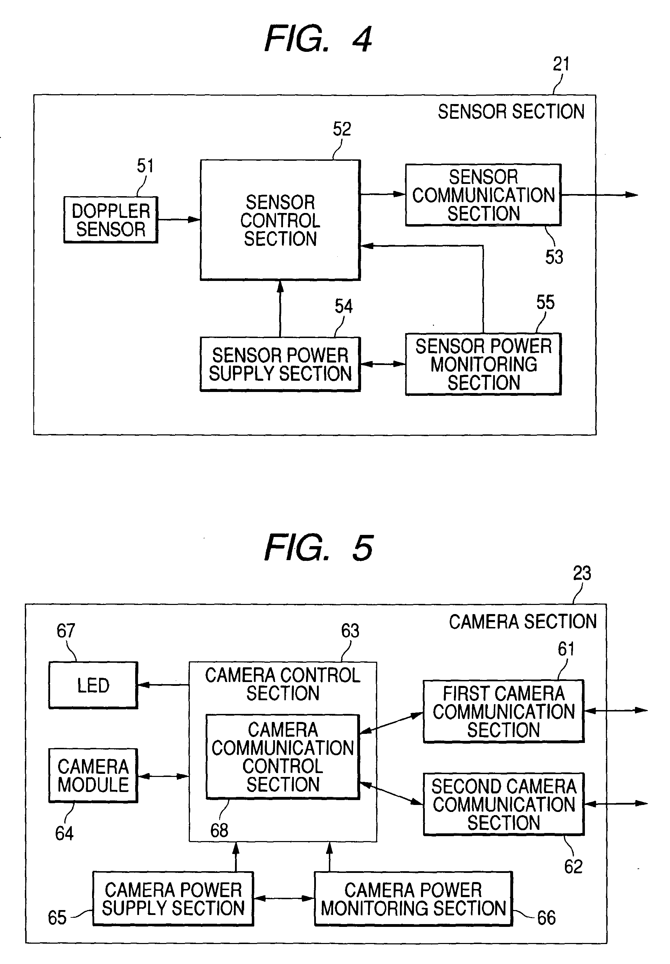

Fig. 4 is a block diagram showing a schematic configuration of the sensor section 21. As shown in Fig. 4, the sensor section 21 has a sensor 51, a sensor control section 52, a sensor communication section 53, a sensor power supply section 54, and a sensor power monitoring section 55.

The sensor 51 detects a change in a state of the security region. As the sensor 51, for example, a Doppler sensor, a vibration sensor, an MIR (Micro Impulse Radar) sensor, or the like can be used. However, a usable sensor is not limited to the above-described sensors, and any sensor can be used as long as it can identify the change in state of the security region.

The vibration sensor detects vibration or sound. The vibration sensor is provided at a door, for example, so as to detect vibration of the door or so as to detect sound or vibration when a lock is touched, for example, at the time of picking. Further, by providing the pyroelectric sensor or the lead switch, presence of a person or movement of an obj ect can be detected. Further, when the lead switch or the MIR sensor is provided at the door or a window, opening and closing of the door or window is detected, or a breakage of a window glass or the like is detected. Moreover, the MIR sensor detects an object through reflection.

In the sensor section 21 according to this embodiment, a Doppler sensor 51 is mounted as the sensor 51, among the various sensors.

Moreover, sensors to be used are not limited to ones described above. Further, according to the specification of the security system or the like, the number types of used sensors, or the combination thereof may be changed. In general, in the security system, preferably, the sensor section 21 described above is provided at each door or window in the management region.

The Doppler sensor 51 is connected to the sensor control section 52, and information (change information) regarding a change detected by the sensor is transmitted to the sensor control section 52. Moreover, the change information detected by the sensor 51 is information regarding a degree of change in state (a level of the change in state) detected by the sensor 51.

The sensor control section 52 controls the entire sensor 21. For example, the sensor control section 52 gives notice of abnormality, or when a battery is used as the sensor power supply section 54, monitors a remaining battery level, and so on. Specifically, when receiving the change information detected by the detecting section 51, the sensor control section 52 judges whether or not the level of the change in state detected by the detecting section 51 is an abnormal level (abnormal state).

In the sensor control section 52, a threshold value for judging whether or not the change information detected by the detecting section 51 represents abnormality is stored in advance. Thus, the sensor control section 52 compares the change information transmitted from the detecting section 51 with the threshold value, and, when the change information exceeds the threshold value, judges that the abnormality occurs. When the sensor control section 52 judges that the abnormality occurs, the sensor control section 52 gives an abnormality notice to the main controller 25. The abnormality notice from the sensor control section 52 is performed through the sensor communication section 53.

The sensor communication section 53 is an interface through which the sensor 21 communicates with the main controller 25. The sensor 21 performs wireless communication with the main controller 25. In this embodiment, the sensor 21 performs wireless communication with the main controller 25 by using a specified low-power radio communication. For this reason, the sensor communication section 53 has an RFID (radio frequency identification) (wireless tag) for the specified low-power radio communication. The abnormality notice from the sensor control section 52 is transmitted from the sensor communication section 53 to the main controller 25.

Moreover, in this embodiment, the sensor 21 performs unidirectional communication with the main controller 25, that is, from the sensor 21 to the main controller 25. Alternatively, the sensor 21 may perform bidirectional communication with the main controller 25. However, in a case of the bidirectional communication, one device needs to be in a standby state so as to continuously receive a signal from the other device. For this reason, power consumption is increased. In contrast, in a case of the unidirectional communication like in this embodiment, the detecting section 51 just gives the abnormality notice to the main controller 25 when the abnormality is detected by the detecting section 51, and thus the power consumption can be reduced.

Further, the sensor power supply section 54 is a power supply for driving the individual parts of the sensor 21. The sensor power supply section 54 can be an AC power supply or a battery. However, since the sensor 21 is provided at the door or window, the battery is preferably used. In this case, the sensor 21 does not require a line for communication or a line for power, thereby realizing so-called full wireless. Moreover, as the battery, a primary battery, a secondary battery, a solar cell, or the like can be used.

When the battery is used as the sensor power supply section 54, there may be a case in which the battery is run down, and the sensor 21 stops. In order to prevent this problem, the remaining battery level needs to be monitored. For this reason, the sensor 21 has the sensor power monitoring section 55 that monitors the remaining battery level. The sensor power monitoring section 55 periodically monitors the remaining battery level, and transmits the monitoring result to the sensor control section 52. The sensor control section 52 judges on the basis of the monitoring result whether or not the remaining battery level is less than a predetermined value. When the sensor control section 52 judges that the remaining battery level is less than the predetermined value, the sensor communication section 53 transmits a remaining battery level lowering notice to the main controller.

### (Camera section)

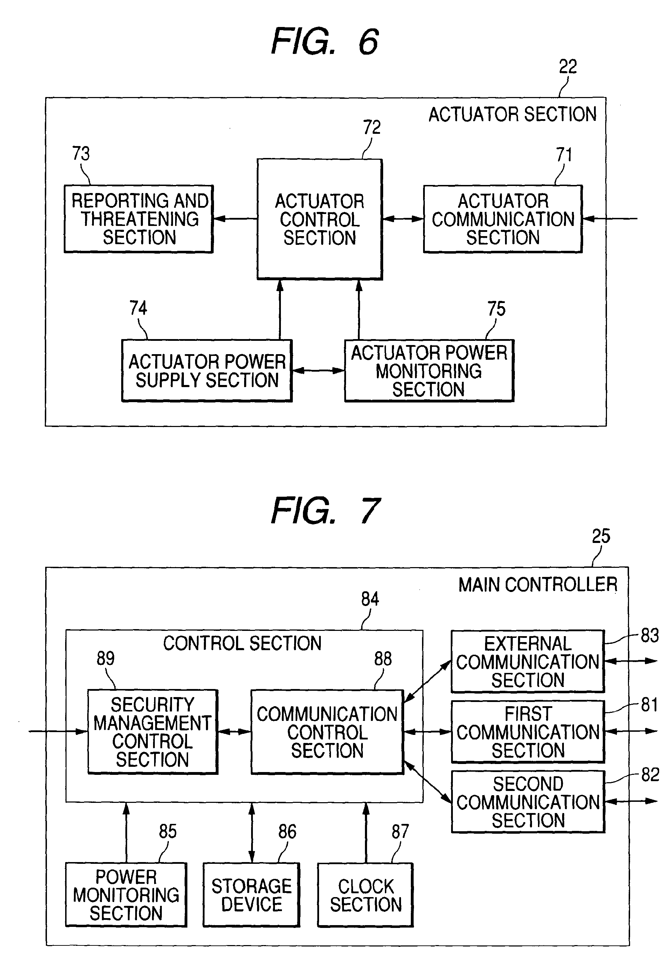

The camera section 23 images an image of the state of the security region. Fig. 5 is a block diagram a schematic configuration of the camera section 23. As shown in Fig. 5, the camera section 23 has a first camera communication section 61, a second camera communication section 62, a camera control section 63, a camera module 64, a camera power supply section 65, a camera power monitoring section 66, and an LED 67.

The first camera communication section 61 and the second camera communication section 62 are interfaces through which the camera 23 communicates with the main controller 25. In this embodiment, the camera 23 performs wireless communication with the main controller 25. Further, the communication through the first camera communication section 61 and the communication through the second camera communication section 62 are performed by using different communication systems.

Specifically, for the wireless communication through the first camera communication section 61, the specified low-power radio communication is used. Further, for the wireless communication through the second camera communication section 62, a wireless communicationbasedon IEEE 802.11b standard (hereinafter, referred to as 'wireless LAN') is used. The specified low-power wireless communication system has low power consumption, and the wireless LAN communication system has high power consumption. Accordingly, different communication systems are employed so that the communication by the wireless LAN is suppressed to the minimum according to types of communication data.

However, a communication system to be used is not limited to the above-described communication systems. Any communication systems may be employed as long as a combination of the communication systems uses different communication speeds. When the specified low-power radio communication is used for the wireless communication through the first camera communication section 61, a wireless communication system based on IEEE 802.11 standard (for example, 802.11a, 802.11g, or the like), a wireless communication system based on IEEE 802.15 standard (for example, Bluetooth (Registered Trademark), UWB (Ultra Wide Band), ZigBee (Registered Trademark), or the like) can be used for the wireless communication through the second camera communication section 62.

The camera control section 63 controls the entire camera section 23. For example, the camera control section 63 instructs the camera module 64 to take images, controls reception of the image data being taken, controls lighting of the LED 67 which will be described below, or monitors the remaining battery level.

The camera communication control section 68 controls the first camera communication section 61 and the second camera communication section 62 so as to control communication from the camera section 23 to the main controller 25. The camera control section 63 judges whether a communication is to be performed via the first camera communication section 61 or the second camera communication section 62 according to the type of transmission data from the camera section 23 to the main controller 25. That is, the camera communication control section 68 has a function of judging whether a communication using a specified low-power system or a communication using a wireless LAN system is appropriate according to the type of the communication data. When the communication by the specified low-power system is performed, the camera communication control section 68 controls the first camera communication section 61 so as to perform the communication. Further, when the communication by the wireless LAN system is performed, the camera communication control section 68 controls the second camera communication section 62 so as to perform the communication.

The camera module 64 images a predetermined image on the basis of the instruction of the camera control section 63. The camera module 64 has an imaging device, such as a CCD (charge-coupled device) or the like. For example, when the abnormality occurs, the camera module 64 takes an image of the abnormal state or takes an image by an instruction of a user. Further, the camera module 64 preferably has a pan/tilt function. In this case, a space including a certain range can be imaged, and a fixed-point image is not taken.

Further, the image taken by the camera module 64 may be a still picture or a motion picture. Image data taken by the camera module 64 is transmitted to the camera control section 63. Then, through the control of the camera control section 63, the image data is transmitted to the main controller 25 through the second camera communication section 62.

The camera power supply section 65 is a power supply for driving the individual parts of the camera 23. As the camera power supply section 65, a battery or an AC power supply can be used. When a battery is used as the camera power supply section 65, since the camera 23 does not require a line for communication or a line for power, an installing position of the camera 23 has no limitation. Moreover, as the battery, a primary battery or a secondary battery can be used.

Further, the camera power monitoring section 66 monitors the remaining battery level used as a power supply. The monitoring result (for example, a battery voltage) by the camera power monitoring section 66 is transmitted to the camera control section 63. The camera control section 63 judges whether or not the remaining battery level is less than a predetermined value. When it is judged that the remaining battery level is less than the predetermined value (for example, less than a predetermined voltage), the camera control section 63 gives a remaining battery level lowering notice to the main controller 25.

The camera power supply section 65 is not limited the use of the battery. For example, an AC power supply can also be used. In this case, the camera power monitoring section 66 for monitoring the remaining battery level does not need to be provided. Further, when the AC power supply is used, a motion picture which requires high power consumption can be easily taken and image data of the motion picture can be easily transmitted.

The LED 67 is a light for illumination. The LED 67 is turned on when brightness at a place where the camera is installed is insufficient at the time of imaging. The LED 67 can be manually or automatically turned on. When the LED 67 is manually turned on, a user can access the main controller 25 through the cellular phone 12 so as to turn on the LED 67. Further, when the LED 67 is automatically turned on, for example, the camera control section 63 may judge whether or not brightness at the place where the camera is installed is enough for the imaging. When it is judged that brightness at the place where the camera is installed is enough for the imaging, the LED 67 may be turned on.

Moreover, in this embodiment, the camera section 23 takes the image of the state when abnormality occurs, and does not have a function as a sensor for detecting abnormality. However, like the sensor section 21, the camera section 23 may also be used to detect abnormality. In this case, preferably, imaging by the camera section 23 is set to be automatically performed for each predetermined time.

In this case, on the basis of image data being taken, presence/absence of abnormality is judged. As for the presence/absence of abnormality, the image data being taken is compared for each predetermined time. When it is judged that the change in state occurs, it is judged that abnormality occurs. The judgment of presence/absence of abnormality may be performed by the camera 23 section or the main controller 25.

When the judgment of presence/absence of abnormality is performed by the camera section 23, a threshold value is stored in the camera control section 63. Then, the camera control section 63 compares a degree of change in state with the threshold value on the basis of the image data. When the degree of change in state exceeds the threshold value, it is judged that abnormality occurs.

On the other hand, when the judgment of presence/absence of abnormality is performed by the main controller 25, the camera section 23 transmits the image data being taken for each predetermined time. Then, the main controller 25 judges presence/absence of abnormality on the basis of the image data.

As described above, the communication between the camera section 23 and the main controller 25 is performed by the wireless communication through the first camera communication section 61 and the second camera communication section 62. Further, for the communication between the first camera communication section 61 and the main controller 25, the specified low-power radio communication is used. For the communication between the second camera communication section 62 and the main controller 25, the wireless LAN system is used. The details regarding the communication between the camera 23 and the main controller 25 will be described below.

### (Actuator section)

When the abnormality occurs, the actuator section 22 warns about the abnormality toward the outside or threatens a suspected person or the like. The actuator section 22 is connected to the main controller 25 for communication, and reports the abnormality or threatens the suspected person or the like on the basis of an instruction from the main controller 25. Fig. 6 is a block diagram showing a schematic configuration of the actuator section 22. As shown in Fig. 6, the actuator section 22 has an actuator communication section 71, an actuator control section 72, a reporting and threatening section 73, an actuator power supply section 74, and an actuator power monitoring section 75.

The actuator communication section 71 is an interface through which the actuator section 22 communicates with the main controller 25. The actuator section 22 may perform wire or wireless communication with the main controller 25. However, wireless communication is preferably used so that a place where the actuator section 22 is installed is not limited. In this embodiment, as a wireless communication system, the specified low-power radio communication is used.

When the abnormality occurs, the actuator communication section 71 receives a signal (abnormality signal) regarding the occurrence of the abnormality transmitted from the main controller 25. Theabnormality signal received by the actuator communication section 71 is transmitted to the actuator control section 72.

The actuator control section 72 controls the entire actuator section 22. That is, the actuator control section 72 controls the actuator communication section 71 so as to communicate with the main controller 25. Further, when receiving the abnormality signal from the main controller 25, the actuator control section 72 activates the reporting and threatening section 73 according to that signal.

The reporting and threatening section 73 reports the abnormality to the outside by "sound" or "light", and threatens a trespasser or the like. As the reporting and threatening section 73, specifically, a bell, a buzzer, a siren, an illumination, or the like can be used.

Moreover, any actuator section 22 may be used as long as the actuator section 22 can receive the abnormality signal from the main controller 25. The actuator section 22 may perform unidirectional communication or bidirectional communication with the main controller 25. However, when a battery is used as a power supply for driving the actuator section 22, data regarding the remaining battery level needs to be transmitted from the actuator 22 to the main controller 25. In this case, therefore, bidirectional communication is preferably used.

Moreover, as the actuator power supply section 74 for driving the actuator section 22, an AC power supply or a battery can be used. Preferably, the battery is used. In this case, the actuator section 22 does not require a line for communication or a line for power, thereby realizing so-called full wireless. Moreover, as the battery, a primary battery, a secondary battery, a solar cell, or the like can be used.

Further, when the battery is used as the actuator power supply section 74, the actuator power monitoring section 75 that monitors the remaining battery level is preferably provided. The actuator power monitoring section 75 periodically monitors the remaining battery level, and transmits the monitoring result to the actuator control section 72. The actuator control section 72 judges on the basis of the monitoring result whether or not the remaining battery level is less than a predetermined value. When it is judged by the actuator control section 72 that the remaining battery level is less than the predetermined value, the actuator section 22 transmits a remaining battery level lowering notice to the main controller 25 through the actuator communication section 71.

### (Main Controller)

The main controller 25 controls the sensor section 21, the camera section 23, the actuator section 22 and the appliance control section 24 so as to control the entire monitoring system 11. Fig. 7 is a block diagram showing a schematic configuration of the main controller 25.

As shown in Fig. 7, the main controller 25 has a first communication section 81, a second communication section 82, an external communication section 83, a control section 84, a power monitoring section 85, a storage device 86, and a clock section 87.

The first communication section 81 and the second communication section 82 are interfaces through which the main controller 25 communicates with the sensor section 21, the camera section 23, the actuator 22 and the appliance control section 24. That is, the main controller 25 communicates with the sensor section 21, the camera section 23, the actuator 22 and the appliance control section 24 through the first communication section 81 and the second communication section 82.

Further, for the communication through the first communication section 81 and the communication through the second communication section 82, different communication systems are adopted. Specifically, for the communication through the first communication section 81, the specified low-power radio communication is used, and, for the communication through the second communication section 82, the wireless LAN system is used.

The external communication section 83 is an interface through which the main controller 25 communicates with the external network 13. The main controller 25 is connected to Internet (Registered Trademark) through the external communication section 83. That is, the monitoring system 11 is connected to the external network 13 through Internet (Registered Trademark).

As such, the main controller 25 is connected to the sensor section 21, the camera section 23, the actuator section 22 and the appliance control section 24 for communication, and also is connected to the external network 13 for communication.

The control section 84 controls the entire main controller 25. The control section 84 has a communication control section 88 and a security management control section 89.

The communication control section 88 controls the first communication section 81, the second communication section 82, and the external communication section 83. That is, the communication control section 88 controls communications with the sensor section 21, the actuator section 22, the camera section 23, the appliance control section 24, and the external network 13.

The communication control section 84 judges whether the communication is to be performed via the first communication section 81 or the second communication section 82 according to the type of communication data. That is, the communication control section 88 has a function of judging whether the communication using the specified low-power system or the communication using the wireless LAN system is appropriate according to the type of the communication data. When the communication by the specified low-power system is performed, the communication control section 88 controls the first communication section 81 so as to perform the communication. When the communication by the wireless LAN system is performed, the communication control section 84 controls the second communication section 82 so as to perform the communication.

The security management control section 89 performs a control for performing various kinds of setups including an alert state setup of the security system or a control for giving notice of abnormality to the user on the basis of data transmitted from the sensor section 21 or the camera section 23.

Further, the security management control section 89 may perform a predetermined processing on the image data transmitted from the camera section 23. For example, as for the predetermined processing, when a specified portion of the image data being taken by the camera section 23 is displayed on a magnified scale, a processing of cutting the portion to be displayed on the magnified scale, from the image is exemplified. When the abnormality is a trespass of a suspected person, the specified portion is the face of the trespasser or the like.

The power monitoring section 85 monitors a power supply for driving the main controller 25. As the power supply for driving the main controller 25, a primary battery, a secondary battery, a solar cell, or an AC power supply may be used. When the power supply of the main controller 25 is the primary battery or the secondary battery, the main controller 25 has the power monitoring section 85. That is, when the power supply of the main controller 25 is not a power supply that requires replacement (permanent power supply), such as the AC power supply or the solar cell, the power monitoring section 85 monitors the remaining battery level.

In this case, the monitoring result by the power monitoring section 85 is transmitted to the control section 84, and the control section 84 judges whether or not the remaining battery level is less than a predetermined value. As a result of the judgment, when the remaining battery level is less then the predetermined value, the main controller 25 transmits a mail indicating that the remaining battery level is less than the predetermined value, to the cellular phone 12 of the user through the external network 83.

Further, the power monitoring section 85 may have a function of detecting that the power is cutoff, regardless of the power supply that is used, such as the battery or the AC power supply. In this case, when the power is cutoff due to any causes, the power monitoring section 85 can detect that power is cutoff. Then, the main controller 25 may transmit a mail indicating that the power is cutoff to the cellular phone 12 of the user. Accordingly, for example, the user can be informed of an alert interruption by an unexpected situation, such as intentional power cutoff by a trespasser or a blackout.

Further, when the power is cutoff, the main controller 25 may store the fact that the power is cutoff in the storage device 86. In addition, the main controller 25 may also store a cutoff time on the basis of time information of the clock section 87. The clock section 87 has a clock function, and a time setup can be manually or automatically performed. For the automatic time setup, for example, time information can be acquired from a clock-dedicated server on the network. Further, when data is received, time information attached to the data can be acquired. For the manual time setup, an access to the main controller 25 from the cellular phone 12 can be performed, and then the setup of the clock function can be changed.

Moreover, in the storage device 86, in addition to the information regarding the power cutoff, a history of the abnormality that is occurred or the image data taken by the camera 23 may be stored. Further, a setup for driving the actuator 22 may be stored. In this case, the main controller 25 drives the actuator 22 on the basis of the setup.

Further, a plurality of LEDs having different colors may be provided in the main controller 25, and the LEDs maybe changed so as to be turned on according to a plurality of alert states of the security system 1. Accordingly, it can be simply judged whether or not the security system 1 is in the alert state at that point. For example, by turning on a red LED when the security system 1 is in an away mode, by turning on a green LED when the security system 1 is in a home mode, and by turning off the LEDs when the security system 1 is in a non-alert mode, the judgment can be easily performed.

### (Appliance control section)

The appliance control section 24 has an appliance controller 31 that operates various appliances 41 (electrical apparatus) such as an air conditioner 41a, an illumination 41b and a television 41c on the basis of the instruction from the main controller 25, and also has the above-described appliances 41. The appliance controller 31 is an apparatus which relays information communication between the main controller 25 and the above-described appliances 41 through the wireless communication by the specified low-power system.

That is, the electrical apparatus controller is used in the management system in which the main controller that can communicate with the communication terminal through the external network, the sensor that is disposed in a predetermined management region, and at least one electrical apparatus that is managed by the main controller are connected with one another through wireless connection. Here, the main controller can control the operation of the electrical apparatus on the basis of the detection result by the sensor or the operation information input from the communication terminal. Then, the electrical apparatus controller relays information communication between the main controller and the electrical apparatus.

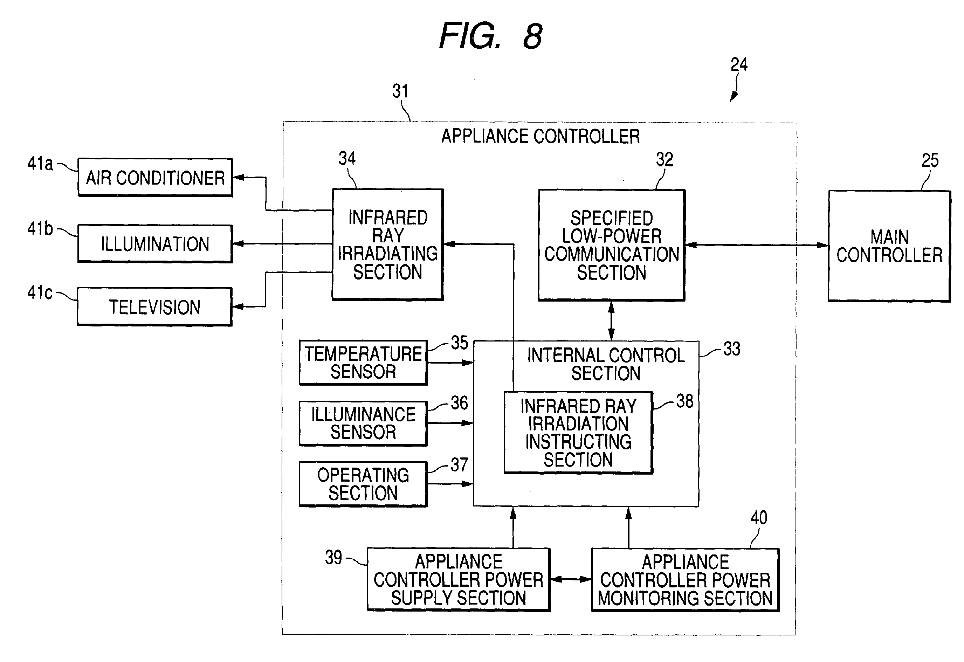

Fig. 8 is a block diagram showing a schematic configuration of the appliance control section. As shown in Fig. 8, the appliance control section 24 has the appliance controller 31 and a plurality of appliances 41. The appliance 41 is not particularly limited as long as it is generally called an appliance. In this embodiment, as the appliances, the air conditioner 41a, the illumination 41b, the television 41c and the like are provided.

The appliance controller 31 has a specified low-power communication section 32, an internal control section 33, an infrared ray irradiating section 34, a temperature sensor 35, an illuminance sensor 36, an operating section 37, an appliance controller power supply section 39, and an appliance controller power monitoring section 40.

The specified low-power communication section 32 is an interface for performing information transmission and reception with the main controller 25. The specified low-power communication section 32 is connected to the main controller 25 through wireless connection. In this embodiment, the specified low-power communication section 32 performs wireless communication with the main controller 25 by the specified low-power system. For this reason, the specified low-power communication section 32 has a specified low-power RFID (wireless tag) . The specified low-power communication section 32 primarily has a function of receiving an appliance control command transmitted from the main controller 25. Further, in addition to this function, on the basis of a change in temperature or a change in illuminance detected by the temperature sensor 35 or the illuminance sensor 36, the specified low-power communication section 32 has a function of transmitting, to the main controller 25, a signal (feedback signal) indicating that various appliances 41 are normally operating.

The internal control section 33 controls the entire appliance controller 31. For example, on the basis of the appliance control command transmitted from the main controller 25, the internal control section 33 outputs an instruction to the infrared ray irradiating section such that a corresponding appliance performs a target operation. Further, on the basis of the instruction of the user input from the operating section 37, the internal control section 33 outputs an instruction to the infrared ray irradiating section 34 such that the corresponding appliance performs the target operation. The internal control section 33 has an infrared ray irradiation instructing section 38 that outputs an instruction to the infrared ray irradiating section 34.

On the basis of the instruction content from the infrared ray irradiation instructing section 38, the infrared ray irradiating section 34 irradiates infrared rays onto a corresponding appliance among the plurality of appliances which can be controlled by the appliance controller 31, such that the appliance performs the target operation. Moreover, as for a method of irradiating infrared rays in the infrared ray irradiation instructing section 38, a method of operating a known remote control using infrared rays can be adopted.

The temperature sensor 35 detects a temperature in a room where the appliance controller 31 is provided. The illuminance sensor 36 detects illuminance in the room where the appliance controller 31 is provided. That is, the temperature sensor 35 and the illuminance sensor 36 can detect a change in temperature or illuminance of the room at the time of turning on/off the individual appliances 41a to 41c by the instruction from the internal control section 33.

Then, the temperature (or illuminance) detection result by the temperature sensor 35 or the illuminance sensor 36 is transmitted to the internal control section 33, and the internal control section 33 judges, on the basis of the temperature (or illuminance) detection result, whether or not the individual appliances 41a to 41c are normally operating. On the judgment result, the internal control section 33 can create a signal indicating that the individual appliances 41a to 41c are normally operating (or a signal indicating that the individual appliances 41a to 41c are not normally operating), and can transmit the signal to the main controller 25 through the specified low-power communication section 32.

The operating section 37 has a pluralityof operating keys. The user performs the input from the operating keys, and input information is transmitted from the internal control section 33 to the infrared ray irradiating section 34, such that the corresponding appliance can perform the target operation. That is, the user can perform the remote control operations of the individual appliances 41a to 41c by using the operating keys. The concrete configuration of the operating section 37 will be described below.

Further, the appliance controller power supply section 39 is a power supply for driving the individual parts of the appliance controller 31. The appliance controller power supply section 39 can be an AC power supply or a battery. However, in view of convenience, preferably, the appliance controller 39 is freely moved to different places in the management region. From this viewpoint, a battery is preferably used. In this case, the sensor section does not require a line for communication and a line for power, thereby realizing full wireless. As the battery, a primary battery, a secondary battery, a solar cell, or the like can be used.

When the battery is used for the appliance controller power supply section 39, there may be a case in which the battery is run down, and the appliance controller 31 stops. In order to prevent this problem, the remaining battery level needs to be monitored. An appliance controller power monitoring section 40 monitors the remaining battery level. The appliance controller power monitoring section 40 periodically monitors the remaining battery level, and transmits the monitoring result to the internal control section 33. The internal control section 33 judges, on the basis of the monitoring result, whether or not the remaining battery level is less than a predetermined value. When it is judged by the internal control section 33 that the remaining battery level is less than the predetermined value, the appliance controller 31 transmits a notice to the main controller 25 through the specified low-power communication section 32.

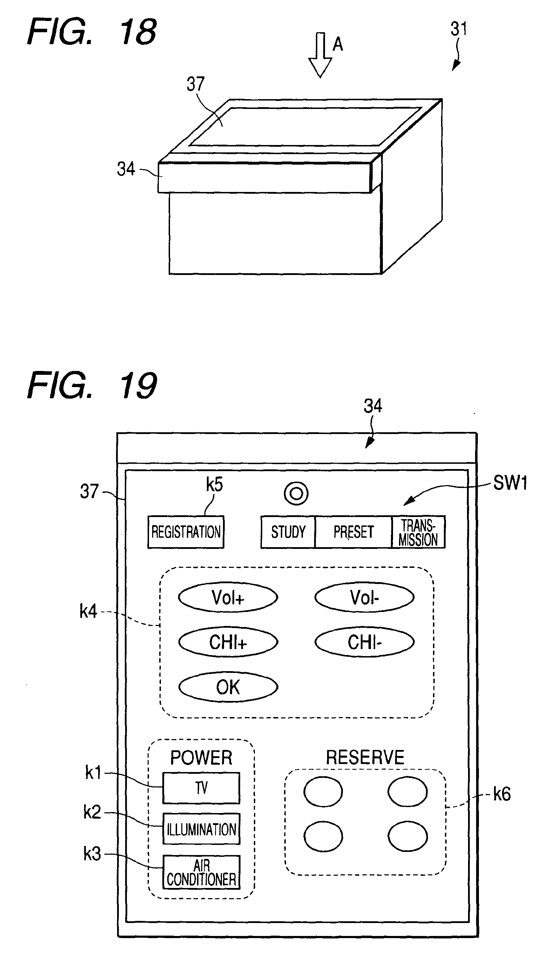

Fig. 18 shows the appearance of the appliance controller 31. As shown in Fig. 18, the appliance controller 31 has a box shape. Further, the appliance controller 31 includes the operating section 37 having the plurality of operating keys in its upper surface, and the infrared ray irradiating section 34 having seven infrared LEDs in a part of a side surface. Moreover, the number of infrared LEDs is not limited to seven. If necessary, the number of infrared LEDs may be changed. However, when about seven infrared LEDs are provided, non-directivity of infrared rays to be irradiated can be realized. As a result, wherever the appliance controller 31 is provided in the management region, various appliances in the management region can be operated by a remote control.

Next, the concrete configuration of the operating section 37 of the appliance controller 31 will be described. Fig. 19 shows one aspect of the operating section 37 as the appliance controller 31 shown in Fig. 18 is viewed from its upper surface (that is, from a direction of an arrow A).

As shown in Fig. 19, at one end of the upper surface of the appliance controller 31, the infrared ray irradiating section 34 having the infrared LEDs is provided. Further, in the operating section 37, a switch SW1, power keys K1, K2 and K3, a group of TV operating keys and cursor keys K4, a registration key K5, and a group of reserve keys K6 are provided.

The switch SW1 is a switch of switching three modes of "preset mode" for performing a remote control setup such that the air conditioner 41a, the illumination 41b, and the television 41c are operated by the appliance controller 31 through the remote control, "study mode" for performing a setup such that other appliances are newly operated by the appliance controller 31 through the remote control, and "transmission mode" for performing a normal remote control operation.

The power key K1 is an operating key for turning on/off power of the television 41c. The power key K2 is an operating key for turning on/off power of the illumination 41b. The power key K3 is an operating key for turning on/off power of the air conditioner 41a.

The group of TV operating keys and cursor keys K4 are operating keys for changing channels or volume of the television 41c. The registration key K5 is an operating key for performing a setup such that the specified low-power communication section 32 can communicate with the main controller 25. The reserve key K6 is an operating key which, when an appliance other than the air conditioner 41a, the illumination 41b, and the television 41c is newly registered so as to be operated through the remote control by using the "study mode", is used to turn on/off power the appliance.

According to the appliance controller 31, a plurality of appliances, such as the air conditioner 41a, the illumination 41b, and the television 41c, and other appliances, can be individually operated through the remote control.

In addition, the appliance controller 31 has the specified low-power communication section 32 so as to perform wireless communication with the main controller 25 by the specified low-power system. Hereinafter, the communication between the appliance controller 31 and the main controller 25 will be described.

### (Communication between Appliance Controller and Main Controller)

As described above, for the communication between the appliance controller 31 and the main controller 25, the specified low-power system is used. In this embodiment, the first communication section 81 of the main controller 25 performs communication with the specified low-power communication section 32 of the appliance controller 31 by the specified low-power system. Here, the wireless communication is bidirectional communication.

As data transmitted from the first communication section 81 to the specified low-power communication section 32, the appliance control command (a command to control turning on/off of the television, turning on/off of the air conditioner, or turning on/off of the illumination) or the like can be exemplified. On the other hand, as data transmitted from the specified low-power communication section 32 to the first communication section 81, the feedback signal (a signal for reporting television operation normality/abnormality, air conditioner operation normality/abnormality, or illumination operation normality/abnormality), a remaining battery level warning signal, or the like can be exemplified. In the data transmitted from the specified low-power communication section 32 to the first communication section 81, on the basis of the change in temperature or the change in illuminance detected by the temperature sensor 35 or the illuminance sensor 36, the signal (feedback signal) reporting that the individual appliances 41 are normally operating is also included. Further, the feedback signal may be simply a signal indicating that the infrared ray irradiating section 34 irradiates infrared rays onto the corresponding appliance.

Moreover, the wireless communication by the specified low-power system has come into wide use as a wireless communication system among various types of general-use sensors. For this reason, the communication apparatus using the specified low-power system has advantages such as simple configuration and ease of installment or setup. Further, the wireless communication by the specified low-power system has an advantage such as fast establishment of communication among the individual terminals and long communication range, as compared with the wireless communication by the wireless LAN system. In addition, the wireless communication by the specified low-power system can perform unidirectional communication and can establish the communication only when data transmission and reception is performed. Therefore, power consumption can be reduced.

As described above, by performing the wireless communication by the specified low-power system, the appliance controller 31 according to this embodiment can receive, from the main controller 25, the instruction information for allowing the target appliance to perform the target operation, and can make the corresponding appliance perform the operation such as turning on/off the power on the basis of the instruction information. Moreover, the instruction information includes identification information of the target appliance and information regarding the content of the target operation (turning on or off power).

As such, by having the appliance controller 31 which can perform two information communications such as the specified low-power and the infrared rays being intervened between the main controller 25 and the individual appliances 41 in the security system according to this embodiment, transmission and reception of information between the main controller 25 and the individual appliances 41 can be smoothly performed, and the appliances can be reliably controlled. Moreover, the appliance controller according to this embodiment can be implemented by a method of mounting the specified low-power communication section described above on the known remote control device of the related art having a study function.

### [A-2: External Network]

The monitoring system 11 is connected to the cellular phone 12 through the external network 13 for communication. The external network 13 is so-called Internet. In the invention, however, since the monitoring system 11 is connected to the VPN, a base station 14 of the cellular phone 12 and the external network 13 perform communication through a protocol converting apparatus (communication relay apparatus) 100. Accordingly, the cellular phone 12 can be connected to the VPN, and can perform communication with the monitoring system 11 through the VPN.

Fig. 1 shows a schematic configuration of the protocol converting apparatus 100 according to this embodiment. As shown in Fig. 1, the protocol converting apparatus 100 has a data communication section (communication section) 101, a Web server 102, a data converting section (communication relay processing section) 103, and a VPN connecting section (network connecting section or VPN connecting section) 104. In the data converting section 103, a data acquiring section 111, a data generating section 112, and a storage device (storage) 113 are provided.

The data communication section 101 receives information transmitted from the cellular phone 12, or transmits information on which data conversion is performed in the protocol converting apparatus 100, to the cellular phone 12. The information on which the data conversion is performed in the protocol converting apparatus 100 is information which is transmitted from the main controller 25 in the monitoring system 11 through the VPN and on which protocol conversion is performed in the data converting section 103 so as to be received by the cellular phone 12. On the other hand, the information to be transmitted from the cellular phone 12 is, for example, address information and password information of the monitoring system 11 to log in the security system 1, or instruction information for turning on/off power of each appliance 41 disposed in the management region of the monitoring system 11.

The Web server 102 functions as an interface through which the cellular phone 12 can be connected to sites connected to Internet. That is, a state in which the cellular phone 12 transmits and receives information to and from the Web server 102 means that the cellular phone 12 is connected to Internet. The cellular phone 12 performs data communication with the Web server 102 through the data communication section 101 by using the HTTP (first communication protocol) as the communication protocol.

The VPN connecting section 104 is provided such that the protocol converting apparatus 100 is connected to the VPN so as to transmit and receive information to and from other apparatuses (systems) connected to the VPN. The main controller 25 of the monitoring system 11 is connected to the VPN through a router 26, and the information transmitted from the main controller 25 is transmitted to the protocol converting apparatus 100 through the VPN connecting section 104. Moreover, in this case, as the communication protocol (second communication protocol) to be used, for example, an SSL or the like can be used.

As described above, the protocol converting apparatus 100 performs communication with the cellular phone 12 by using the HTTP (first communication protocol), and transmits and receives information to and from the main controller 25 connected to the VPN by using the SSL (second communication protocol). The data converting section 103 that converts received data into transmission data is provided such that the cellular phone 12 and the main controller 25 can exchange information.

The data converting section 103 converts data of an HTTP format received from the cellular phone 12 into data of an SSL format, and specifies a dedicated address of a destination monitoring system that is allocated by the VPN to the converted data. The data converting section 103 has the data acquiring section 111 that acquires data received by the Web server 102 and the VPN connecting section 104, the data generating section 112 that generates data according to the destination on the basis of the data acquired by the data acquiring section 111, and the storage device 113 that stores an owner, an address, an ID (identification information) and the like of each monitoring system 11 registered in the security system 1.

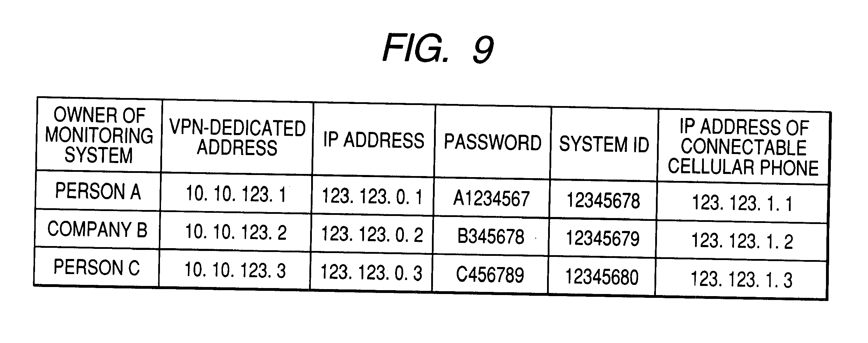

Fig. 9 shows an example of a data table stored in the storage device 113. As shown in Fig. 9, in the data table, the owner of the monitoring system 11 is stored in association with the VPN-dedicated address of the monitoring system, an IP address, a password, an ID, and an IP address (identification information) of a connectable cellular phone.

Further, in the data generating section 112, a protocol converting section 114 and an address authentication specifying section 115 are provided. The protocol converting section 114 converts the data of the HTTP format received from the cellular phone 12 into the data of the SSL format. The address authentication specifying section 115 performs the authentication of the ID number (identification number) of the cellular phone 12, and the IP address and the password of the destination monitoring system 11 transmitted from the cellular phone 12, and specifies the dedicated address allocated by the VPN to the data on which the protocol conversion is performed.

Moreover, the data converting section 103 has a function of performing a protocol conversion on the received data of the SSL format into the data of the HTTP format in order to transmit the data of the SSL format received from the main controller 25 to the corresponding cellular phone 12.

With this configuration, the protocol converting apparatus 100 can pass through a barrier (for example, a router or the like) in a local network such as the monitoring system or the like, such that directional communication can be performed between the monitoring system 11 and the cellular phone 12.

Further, since the cellular phone 12 performs communication by using the protocol converting apparatus 100, the direct connection to the monitoring system under an NAT can be made by a tunneling connection and the VPN-dedicated address, thereby enabling so called "NAT pass". Accordingly, transmission and reception of a mail can be performed between the monitoring system 11 and the cellular phone 12.

In case of the communication using the VPN, the communication is performed by using encrypted packets. For example, the communication between the monitoring system 11 and the cellular phone 12 is encrypted by the SSL. Accordingly, a safety communication can be established. Further, an undesirable access for management can be immediately shut down.

In addition, for example, by assigning a global IP to the terminal as the IP of the VPN, the direct connection can be made from a terminal on a general-use network, which is not connected to the VPN network.

Moreover, in the security system 1 according to this embodiment, the communication between the monitoring system 11 and the cellular phone 12, such as the setup of the security system 1 or the notice of the abnormality when abnormality occurs, is performed by mail. However, the invention is not limited to this configuration. For example, original communication may be used, and an application which can perform the setup or the notice of abnormality may be used. Then, the confirmation or the change of the setup or the notice when abnormality occurs may be performed by the application.

In addition, the application may have a function of, when the abnormality is noticed to the cellular phone 12, confirming that the abnormality is transferred. In this case, it is possible to confirm that the notice of the abnormality reaches the user. Further, when the application is used, since original communication is used, and the main controller 25 of the monitoring system 11 and the cellular phone 12 are continuously connected to each other, a function of confirming whether or not the cellular phone 12 is in a state in which the communication can be performed may be used.

In addition, in the security system 1 according to this embodiment, the individual appliances 41 connected to the security system 1 in the management region can be operated remotely from the cellular phone 12. That is, by using the cellular phone 12, power of the air conditioner 41a and the like can be turned on/off.

### [A-3: Cellular Phone]

The cellular phone 12 communicates with the base station which is connected to the external network 13 through a cable or the like, by transmitting and receiving electrical waves to and from the base station. That is, the cellular phone 12 is connected to the external network 13 through the base station 14, and then is connected to the monitoring system 11 for communication.

Moreover, as the cellular phone 12 used in the security system 1 according to the invention, any cellular phone 12 can be used as long as it can be connected to Internet and has a mail function. Further, when the communication with the monitoring system 11 is performed by an application, a cellular phone 12 in which the corresponding application is stored may be used.

### [B: Setup of Security System]

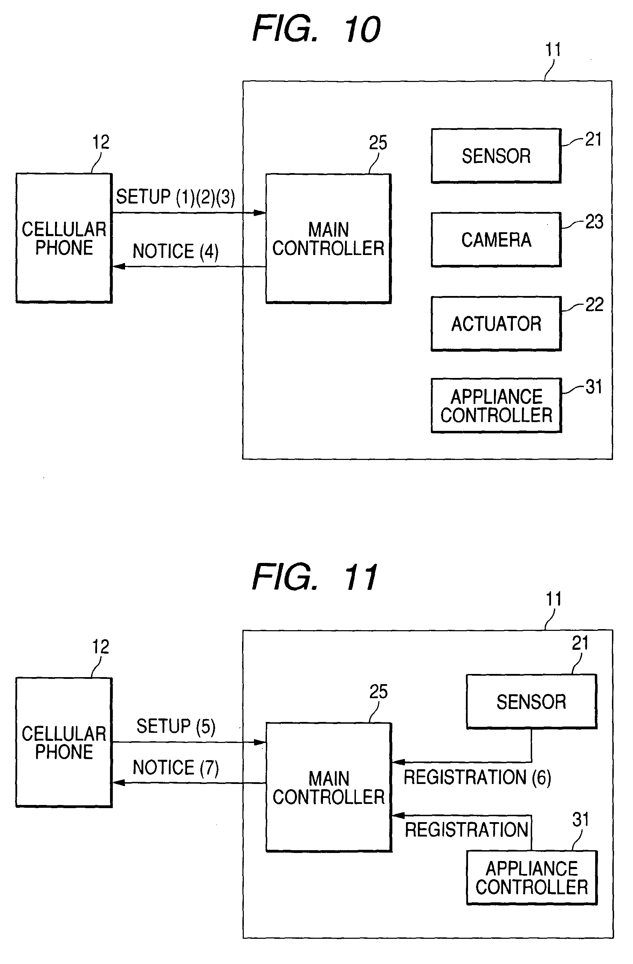

Next, the setup and registration of the security system 1 will be described with reference to Figs. 9 to 15. Fig. 9 shows an example of a data table stored in the storage device 113 in the protocol converting apparatus 100. Further, Figs. 10 to 15 are block diagrams each showing a flow (data transmission and reception) when various kinds of setups and registration of the security system 1 are performed.

First, a user who uses the security system 1 purchases various apparatuses such as the main controller 25, the sensor section 21, the actuator section 22 at the time of a contract of this system. Then, the contractor becomes the owner of the monitoring system, and the owner of the monitoring system, the address of the monitoring system and the like are stored in the data table within the storage device 113 of the protocol converting apparatus 100 by a system administrator.

After performing the above-described registration in advance, at the time of the start of the security system, an initial setup of the main controller 25 is performed. As shown in Fig. 10, the initial setup can be performed by using the cellular phone 12.

First, the user of the cellular phone 12 accesses to an address written in a manual which is attached to the purchased security system (SETUP (1)). Then, the cellular phone 12 is connected to the Web server 102 in the protocol converting apparatus 100. Here, on the cellular phone 12, a screen for inputting the ID and the password of the main controller for the management of the monitoring system 11 written in the manual is displayed.

The user inputs the ID and the password of the monitoring system 11 written in the manual. Here, the address authentication specifying section 115 in the protocol converting apparatus 100 searches the input ID and the password from the table stored in the storage device 113, and when the corresponding monitoring system 11 exists, receives a login of the cellular phone 12 to the system (SETUP (2)). After the login, a screen for registering a new password and a new mail address is displayed on the cellular phone 12.

On this screen, when the new password and the new mail address are input and a setup button is pressed, data regarding the password and the mail address is transmitted to the main controller 25, and the password and the mail address are registered (SETUP (3)). Accordingly, the initial setup of the main controller 25 is completed. Further, when the initial setup of the main controller 25 is completed, a notice indicating that the initial setup is completed is given from the main controller 25 to the cellular phone 12 (NOTICE (4)). Moreover, when an error occurs at the time of the input of the ID or the password, the error may be displayed, and a menu for selecting a screen to reenter may be displayed.

By the above operation, the cellular phone 12 can perform data communication with the monitoring system 11 through VPN.

Next, the registration is performed so as to make the main controller 25 recognize the individual sensors 21 or the camera 23. In each of the sensors 21, the camera 23, and the main controller 25, a registration button is provided, and the registration is performed by using the registration button.

Specifically, when the registration button of the main controller 25 of which initial setup is completed is pressed, the main controller 25 stays in a registration mode for a predetermined time (for example, 30 seconds). On the other hand, when the registration button provided in the camera 23 or the sensor 21 is pressed, a registration command is transmitted from the camera 23 or the sensor 21 of which registration button is pressed.

Here, the registration of the sensor 21 will be described with reference to Fig. 11. First, after the initial setup of the main controller 25 is performed, the main controller 25 is set to be in a registration mode state (SETUP (5)). Then, while the main controller 25 is in the registration mode state, the registration button of the sensor 21 is pressed. Next, a registration command regarding the sensor 21 of which registration button is pressed is transmitted to the main controller 25 (REGISTRATION (6)). When receiving the registration command during the registration mode state, the main controller 25 registers the corresponding sensor 21. Then, when the sensor 21 is registered, the main controller 25 transmits data representing the registration to the cellular phone 12. For a notice to the user, the cellular phone 12 displays a content indicating that the registration of the sensor 21 is completed (NOTICE (7)).

Incidentally, the appliance controller 31 can be registered by the same operation as the registration of the sensor 21.

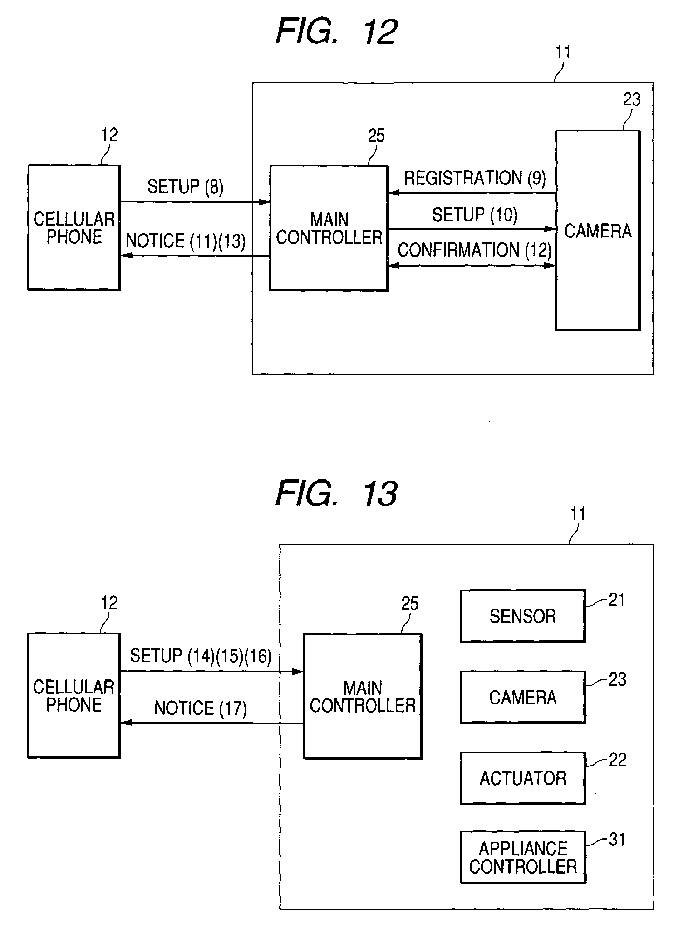

Next, the registration of the camera 23 will be described with reference to Fig. 12. First, after the initial setup of the main controller 25 is performed, the main controller 25 is set to be in the registration mode state (SETUP (8)). Then, while the main controller 25 is in the registration mode state, the registration button of the camera 23 is pressed. Next, a registration command is transmitted from the camera 23 to the main controller 25 by the specified low-power radio communication (REGISTRATION (9)). When receiving the registration command of the camera 23 during the registration mode state, the main controller 25 transmits data required for the setup of the wireless LAN system to the camera 23 by the specified low-power radio communication (SETUP (10)).

When receiving data required for the setup of the wireless LAN system, the camera 23 performs the setup of the wireless LAN system of itself. Then, when the setup of the wireless LAN system is completed, the camera 23 transmits to the main controller 25 by the specified low-power radio communication, a notice indicating that the setup of the wireless LAN system is completed (NOTICE (11)). When receiving the notice of the setup completion from the camera 23, the main controller 25 performs a communication (PING) for confirming whether or not the communication is normally performed by the wireless LAN system (CONFIRMATION (12)). When confirming that the communication with the camera 23 is normally performed, the main controller 25 registers the camera 23. Then, the main controller 25 transmits, to the cellular phone 12, data representing that the registration of the camera 23 is completed. For a notice to user, the cellular phone 12 displays a content indicating that the registration of the camera 23 is completed (NOTICE (13)).

Moreover, in this embodiment, in order to set the main controller 25 to be in the registration mode state, the registration button provided in the main controller 25 is pressed. However, the invention is not limited to this configuration. For example, a command may be transmitted from the cellular phone 12 to the main controller 25 so as to switch the main controller 12 to the registration mode state, and the main controller 25 may receive the command so as to be switched to the registration mode state.

Further, when the main controller 25 is in a normal mode state (not the registration mode state), and when the registration button of the camera 23 or the sensor 21 is pressed, the registration command may be transmitted to the main controller 25. In this case, however, the main controller 25 does not perform the registration of the camera 23 or the sensor 21. The main controller 25 confirms whether or not the wireless communication from the camera 23 or the sensor 21 to the main controller 25 is normally performed on the basis of the received registration command. That is, the main controller 25 has a wireless reception confirmation function. When confirming that the wireless communication is normally performed, the main controller 25 transmits a notice mail representing the confirmation to the registered mail address.

Next, various kinds of setups of the security system 1 are performed. Various kinds of setups are performed by accessing a prescribed address and displaying a menu according to the security system 1, with the registered cellular phone 12. In the menu, for example, a security setup, a registration information setup, and the like are included.

### [B-1: Security Setup]

The security setup relates to a specific setup of the home security. For example, the security setup relates to a setup of an alert state and a setup of the actuator or the camera.

### (Alert Setup)

The alert setup is a menu for setting the alert state of the security system 1. In this embodiment, as the modes representing the alert state, an alert mode and a non-alert mode are included. In the alert mode, the away mode and the home mode are included.

The non-alert mode is a mode which sets the security system 1 to be in a non-alert state. The non-alert state indicates a state in which the security system 1 turns an alert off. In this state, even when the sensor 21 detects the change in state, the detection is not output as a warning.

Further, the alert mode is a mode which sets the security system 1 to be in an alert state. The alert state indicates a state in which the security system 1 is on the alert. In this state, when the sensor 21 detects the change instate (abnormality), a warning can be output.

Further, the away mode is a mode which sets all the sensors 21 to be in the alter states. Further, the home mode is a mode which is used when a person stays in the house, but he wants to detect a trespass in the house byasuspectedperson. That is, the home mode is a security state between the non-alert mode and the away mode. When the home mode or the away mode is selected, the security system 1 is in the alert state.

Next, a method of performing the alert setup of the security system 1 will be described with reference to Fig. 13. First, an access to the main controller 25 is made by using the registered cellular phone 12 (SETUP (14)). Next, a login screen for inputting the ID and the password registered in the initial setup is displayed. Moreover, when a notice such as a system maintenance message or the like is received, that notice may be displayed on the login screen.

Then, when a login is made by inputting the ID and the password (SETUP (15)), a screen of a main menu is displayed. Moreover, considering that the registered password is forgotten, a menu for giving notice of the password may be provided. In this case, when the menu for giving notice of the password is selected, a screen for inputting the ID is displayed. When a correct ID is input, the registered password may be noticed to the registered mail address. Then, the login screen may be displayed.

In the main menu, a menu for accessing the home security and a menu (registration information setup) for accessing menu of a change of or an addition to the registered setup are displayed. Further, when information (for example, a warning regarding lowering of the remaining battery level) which is necessarily noticed to the user of the security system 1 exists, the information is preferably displayed on the main menu.

When the menu for accessing the home security is selected on the main menu, a screen of a setup menu regarding the home security is displayed. On the screen of the setup menu, a current alert state is displayed. When the alert mode is changed, another alert mode (any alert mode, which is not currently set, among "away mode", "home mode" and "alert off") is selected (SETUP (16)). Accordingly, display indicating that the changed alert state is selected is performed, and simultaneously a new setup is displayed on the setup screen as the current alert state (NOTICE (17)). By doing so, the alert state can be changed and set.

Moreover, when the alert state is changed, the changed alert state is displayed on the cellular phone 12, but a mail indicating that the alert state is changed may be transmitted from the main controller 25 to the cellular phone 12.

Further, when the menu for accessing the setup screen of the actuator 22 is selected on the main menu, the actuator setup screen is displayed. Further, when the menu for accessing the setup screen of the camera 23 is selected on the main menu, the setup screen of the camera or a screen for displaying the image taken by the camera is displayed. Further, when the menu for accessing the setup screen of the appliance controller 31 is selected on the main menu, the setup screen of the appliance controller and individual appliances is displayed.

Each screen displayed on the cellular phone 12 as described above is displayed on the basis of the data transmitted from the data communication section 101 to the cellular phone 12, after the data transmitted from the main controller 25 is received by the protocol converting apparatus 100 and then the protocol conversion is performed on the data by the data converting section in the protocol converting apparatus 100.

### (Actuator Setup)

The actuator setup is a menu for performing the setup regarding the actuator 22. The actuator setup includes a setup for forcibly driving the actuator 22 regardless of thepresence/absence of the abnormality. In this case, driving time or the like can be set. When the menu for accessing the setup screen of the actuator 22 is selected on the main menu, the actuator setup screen is displayed.

Moreover, when the alert mode is being selected, the setup regarding the actuator 22 to be driven when the abnormality occurs may be performed. For example, when any one sensor detects the abnormality, the setup to determine which actuator 22 is to be driven, the setup of driving time, a setup of intensity of sound or light, and the like can be performed.

### (Camera Setup)

The camera setup is a menu for performing the setup regarding the camera 23. Specifically, the camera setup is a menu for viewing the image taken by the camera 23. The setup regarding the camera 23 includes, for example, an imaging setup, an image update setup, an image history setup, and the like.

When the menu for accessing the setup screen of the camera 23 is selected on the main menu, a screen for selecting the registered camera 23 is displayed. Here, when the registered camera 23 is selected (when a plurality of registered cameras exist, one of them is selected), an access is made to the image taken by the selected camera 23 so as to view the image. Further, on the setup screen of the camera 23, the setup of imaging resolution or the setup for turning on/off an illumination can be performed.

Moreover, the imaging setup is a setup regarding imaging by the camera 23. As the items of the imaging setup, for example, the number of images (in case of a still picture), imaging time (in case of a motion picture), an imaging angle (when a pan/tilt function exists), and the like are included.

Further, when a predetermined process is executed on the image data taken at the time of the occurrence of the abnormality, a setup for the process can be performed. For example, when the abnormality occurs due to the trespass of the suspected person, the setup may be performed such that a process is executed so as to detect a face of the suspected person and display that on magnified scale. Further, even when the abnormality does not occur, when the image of the security region needs to be taken by the camera 23, an imaging instruction may be made in the imaging setup, so that imaging can be performed.

The image update setup is a setup regarding an update of the image taken by the camera 23. For example, when the camera 23 is set so as to take images at a predetermined interval, the interval may be set. Further, the setup can be manually performed.

The image taken by the camera 23 can be stored in the storage device of the main controller 25. In the image history setup, types of images to be stored among the images previously taken, the storage period of each image to be stored, and the like can also be set.

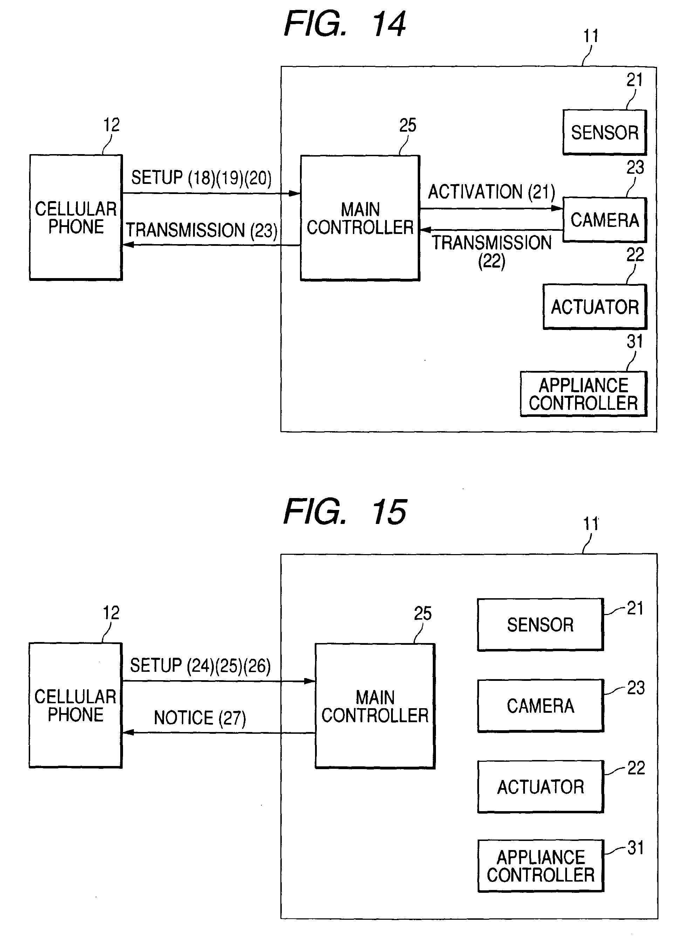

Moreover, an access to the camera 23 may be made from the main menu so as to make the camera 23 perform imaging, and then the taken images may be transmitted to the cellular phone 12 to be displayed thereon. This method will be described with reference to Fig. 14.

First, the ID and the password are input on the login screen, so that the main menu is displayed (SETUP (18), (19)). Next, a menu for allowing the camera 23 to take the image is selected on the main menu (SETUP (20)). From the menu, the camera 23 is activated, and an instruction to take an image is made. Accordingly, from the main controller 25 to the camera 23, an activation signal is transmitted, and simultaneously an instruction signal to take the image is transmitted (ACTIVATION (21)). The activation signal and the instruction signal are transmitted by using the specified low-power radio communication.

When receiving the activation signal and the instruction signal, the camera 23 is activated so as to take a predetermined image. Then, image data taken is transmitted to the main controller 25 (TRANSMISSION (22)). The image data is transmitted by using the wireless LAN system. The main controller 25, which has received the image data, transmits the image data to the cellular phone 12 through the network (TRANSMISSION (23)). Accordingly, the user can view the image which is instructed to be taken with the cellular phone 12.

### [B-2: Registration Information Setup]

The registration information setup relates to the setup change of the registration information of the security system 1. The setup change will be described with reference to Fig. 15. First, the ID and the password are input on the login screen, and the main menu is displayed (SETUP (24), (25)). Then, a menu for displaying the registration information setup on the main menu is selected, and thus the menu of the registration information setup is displayed (SETUP (26)). As the contents to be set from the menu of the registration information setup, for example, operation history of the sensor, time adjustment, setup of the mail address, software update, device management, change of the password, and the setup of the actuator are included. Further, when various kinds of setups or setup change are completed, the setup (change) completion is noticed from the main controller 25 to the cellular phone 12 (NOTICE (27)).

When the menu regarding the operation history of the sensor 21 is selected on the menu of the registration information setup, the operation history of the sensor 21 is displayed. As such, in this embodiment, the security system 1 may store information (abnormality history information) regarding the previous operation history (a history of abnormality) of the sensor 21 in the storage device of the main controller 25. As the operation history of the sensor 21 to be displayed, for example, operation date and time, an operated sensor, the detection contents, and the like are included. Further, the number of cases of the operation history of the sensor 21 to be displayed can be appropriately set. In addition, display may be performed from the latest operation history or from the oldest operation history. Further, when imaging by the camera 23 is performed, together with the operation of the sensor 21, corresponding image data may be confirmed.

When the menu regarding the time adjustment is selected on the menu of the registration information setup, a screen of a time setup is displayed. Further, on the screen, information regarding a current automatic update can be displayed, and ON/OFF of the automatic update can be changed. Further, when a menu for automatically setting a time is selected on the screen of the time setup, the time may be automatically set by referring to a clock server on the network or the time attached to other data. In addition, when a menu for manually setting the time is selected on the screen of the time setup, a screen for setting the time is displayed, and thus the time can be manually set.

When a menu regarding the setup of the mail address is selected on the menu of the registration information setup, a menu for changing various kinds of setups of the mail address is displayed. On the menu of the mail address setup, addition, deletion, and change of the mail address can be performed. By selecting "addition" on the menu of the mail address setup, a mail address to be added can be registered. Further, when "change" is selected on the menu of the mail address setup, the registered mail addresses are displayed. Then, a mail address to be changed can be selected from the displayed addresses, and then the selected mail address can be changed. Further, when "deletion" is selected on the menu of the mail address setup, the registered mail addresses are displayed. Then, from the registered mail addresses, a mail address to be deleted can be selected, and then the selected mail address can be deleted.

When a menu regarding the software update is selected on the menu of the registration information setup, a screen for updating software is displayed. When a menu representing "update" is selected on the screen, software is updated through the connection to Internet. When the software update is completed, a screen for giving a notice purporting that the software update is completed is displayed. Moreover, when the software update is not required, even when the menu purporting "update" is selected, a content indicating that software to be updated does not exist is displayed, and the update is not performed.

When a menu regarding the device management is selected on the menu of the registration information setup, a menu for managing devices is displayed. On the menu for managing the devices, for example, a list of registered devices (the sensor 21, the camera 23, the actuator 22, and the like) is displayed. Further, when the list of devices is displayed, a device to be registered as the security system 1 can be suitably selected from the list. Further, from the list of devices, an arbitrary device can be selected, and then the name of the device can be changed. Further, from the list of devices, an arbitrary device can be selected, and then the device can be deleted from the list.

When a menu regarding the change of the password is selected on the menu of the registration information setup, a change menu of the password is displayed. By inputting a current password and a new password on the screen of the change menu, the password can be changed. Further, when the password is changed, a screen indicating that the password is changed is displayed on the cellular phone 12.

Further, when a menu regarding the setup of the actuator is selected on the menu of the registration information setup, a screen for setting the driving setup (ON/OFF) and the driving time of each of the registered actuators 22 is displayed, and then the driving setup and the driving time of the actuator 22 can be suitably set.

Moreover, when an error occurs in the individual conditions described above, a screen for displaying the error is displayed on the cellular phone. Further, in order to stop the use of services of the security system 1, the user can input the password on a screen for stopping the use of the services.

Each screen displayed on the cellular phone 12 as described above is displayed on the basis of the data transmitted from the data communication section 101 to the cellular phone 12, after the data transmitted from the main controller 25 is received by the protocol converting apparatus 100 and then the protocol conversion is performed on the data by the data converting section in the protocol converting apparatus 100.

### [C: Control Method of Appliance Using Appliance Controller]

Next, in the security system 1 according to this embodiment, a method of controlling the individual appliances 41 using the appliance controller 31 will be described.

As the use of the appliance controller 31 according to this embodiment, for example, the use of turning on the power of the appliance so as to threaten the outsider when the outsider intrudes into the security management region, or the use for remotely operating the appliance by the cellular phone 12 can be exemplified.

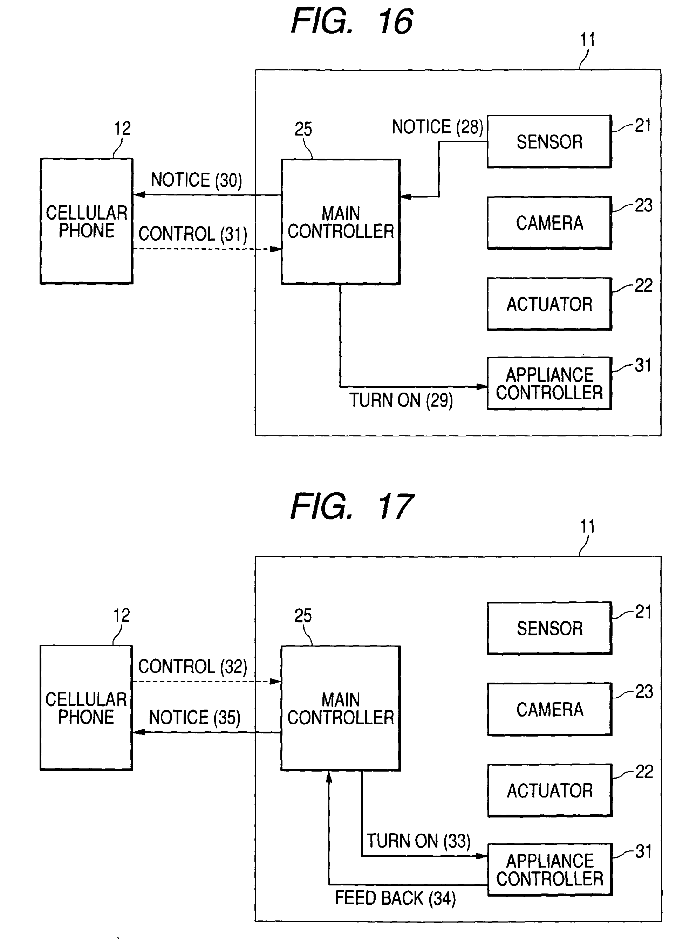

First, the control method of the appliance when the appliance controller 31 is used so as to threaten the outsider will be described with reference to Fig. 16.

When the outsider intrudes into the management region, the sensor section 21 having the Doppler sensor or the vibration sensor detects an object movement or vibration by the intrusion of the outsider, and gives notice to the main controller 25 indicating that the abnormality occurs (transmits an abnormality command) (NOTICE (28)). When receiving the abnormality command, the main controller 25 transmits instruction information to the registered and set the appliance controller 31 so as to turn on the power of the illumination 41b and/or the television 41c (TURN ON (29)). Further, when receiving the abnormality command, the main controller 25 transmits an abnormality notice mail to the cellular phone 12 (NOTICE (30)). Through the abnormality notice mail, the occurrence of abnormality, the kind of abnormality, the type of sensor which detects abnormality, the time when the abnormality occurs and the like are noticed. The transmissionof the abnormality notice mail is preferably performed simultaneously with the transmission of the activating signal to the actuator 22.

Further, if necessary, a control command for activating the actuator 22 or for operating other appliances may be transmitted from the cellular phone 12 to the main controller 25 (CONTROL (31)).

In the appliance controller 31, when receiving the instruction information, the specified low-power communication section 32 transmits the instruction information to the internal control section 33. On the basis of the instruction information, the infrared ray irradiation instructing section 38 in the internal control section 33 transmits the instruction information including the identification information of the corresponding appliance (in this case, the illumination 41b and/or the television 41c) and the information of the operation content (in this case, information indicating that power is turned on) to the infrared ray irradiating section 34. The infrared ray irradiating section 34 irradiates infrared rays onto the corresponding appliance (in this case, the illumination 41b and/or the television 41c) on the basis of the instruction information, such that power is turned on in the appliance.

By sequentially performing the process, when the outsider intrudes into the management region of the security system 1, the outsider is threatened by turning on the power of the appliance, and thus the outsider can be noticed that his behavior is being monitored.

Next, the control method of the appliance when the appliance is operated remotely by the cellular phone 12 will be described with reference to Fig. 17.

First, when a menu for accessing the setup screen for the control of the appliance is selected on the menu screen displayed on the display of the cellular phone 12, the setup screen is displayed on the cellular phone 12. Here, for example, in order to turn on power in the air conditioner, a button indicating "turn on air conditioner [4]" displayed on the setup screen is selected.

Accordingly, the instruction information including the identification information of the air conditioner 41a and the information indicating that the power is turned on in the air conditioner 41a is transmitted from the cellular phone 12 to the protocol converting apparatus 100 (not shown in Fig. 17). In the data generating section 112 of the protocol converting apparatus 100, the protocol converting section 114 converts the identification information and the instruction information from the data of the HTTP format to the data of the SSL format. Further, the address authentication specifying section 115 selects the VPN-dedicated address of the corresponding monitoring system 11, and specifies the destination address of the data converted into the SSL format. The data generated in such a manner is transmitted from the data acquiring section 111 to the VPN connecting section 104, and then is transmitted to the main controller 25 of the corresponding monitoring system 11 (CONTROL (32)). The main controller 25 transmits the received instruction information to the appliance controller 31 (TURN ON (33)).

In the appliance controller 31, when receiving the instruction information, the specified low-power communication section 32 transmits the instruction information to the internal control section 33. On the basis of the instruction information, the infrared ray irradiation instructing section 38 in the internal control section 33 transmits the instruction information including the identification information of the corresponding appliance (in this case, the air conditioner 41a) and the information regarding the operation content (in this case, information indicating that the power is turned on) to the infrared ray irradiating section 34. The infrared ray irradiating section 34 irradiates infrared rays onto the corresponding appliance (in this case, the air conditioner 41a) on the basis of the instruction information, so that the power is turned on.

Next, when power is turned on in the air conditioner 41a and the temperature of the room is changed, on the basis of the change in temperature detected by the temperature sensor 35, the appliance controller 31 transmits, to the main controller 25, a signal (feedback signal) reporting that the individual appliances 41 are normally operating (FEEDBACK (34)). On the basis of the received feedback signal, the main controller 25 gives notice to the cellular phone 12 that the air conditioner 41a normally operates (NOTICE (35)). Moreover, the feedback signal may be simply a signal indicating that the infrared ray irradiating section 34 normally irradiates infrared rays onto the corresponding appliance.

By sequentially performing the process, in the management region of the security system 1, for example, power of the air conditioner in the house can be turned on by the operation from the outside before the user or the like coming back home. Further, in addition to the examples in this embodiment, a boiler may be connected to the appliance controller, so that water in a bath can be boiled before the user or the like coming back home.

Further, in addition to the above-described use method, a use method for security may be considered in which the appliance controller 31 turns on/off the power of the illumination 41b at prescribed time every day as if someone stays in the house.

As described above, according to the security system 1 according to this embodiment, by the combination of the individual use methods, comfortableness can be obtained, in addition to the crime prevention effect.

Further, by using the appliance controller 31 according to the invention, the appliances can be controlled in consideration of energy conservation. For example, by mounting a sensor for detecting a person on the appliance controller 31, everyone can control to turn off the air conditioner in the room where no person stays.

Furthermore, as described above, in the security system 1 according to this embodiment, the protocol converting apparatus 100 that enables the data communication between the monitoring system 11 and the cellular phone 12 is provided. Accordingly, the amount of the data to be temporarily stored in the server on Internet can be reduced. For this reason, when the maintenance and management of the communication system is performed, costs for data communication can be reduced, and thus running costs of the system can be reduced.

In addition, according to the conf iguration in which data management is collectively performed by the main controller 25 of the monitoring system 11, direct data transmission and reception can be performed without temporarily storing data in the server on Internet. For this reason, when the maintenance and management of the security system 1 is performed, what is necessary is only the initial cost required for purchasing and setting this system. That is, a fee for the use of the server or the like does not need to be paid by the month. That is, according to the security system 1 described above, the costs for data communication can be free, and thus the running costs of the system can be reduced.

The invention is not limited to the embodiment, but various changes can be made within the scope read on the appended claims. That is, an embodiment by a combination of technical means suitably changed within the scope read on the appended claims also falls within the technical scope of the invention.

Consequently, the individual blocks of the appliance controller 31, in particular, the internal control section may be configured with hardware logic or may be implemented by software using a CPU as follows.

Consequently, the individual sections of the protocol converting apparatus 100, in particular, the data converting section 103 (except for the storage device 113) may be configured with hardware logic or may be implemented by software using a CPU as follows.

That is, the appliance controller 31 or the protocol converting apparatus 100 has a CPU (central processing section) that executes commands of a control program for realizing the individual functions, a ROM (read only memory) that stores the program, a RAM (random access memory) that expands the program, and a storage device (recording medium) such as a memory, that stores the program and various kinds of data. Then, the object of the invention can be achieved by supplying a recording medium, in which program codes (an executable format program, an intermediate code program, and a source program) of the control program of the camera serving as software for implementing the above-described functions are readably written, and by allowing a computer to read out and execute the program codes written into the recording medium.

As the recording medium, for example, tapes such as magnetic tapes or cassette tapes, discs including magnetic discs such as Floppy (Registered Trademark) discs or hard discs, or optical discs such as CD-ROM, MO, MD, DVD, or CD-R, cards such as an IC card (including a memory card) or an optical card, or semiconductor memories such as mask ROM, EPROM, EEPROM, or flash ROM, can be used.

Further, the appliance controller 31 or the protocol converting apparatus 100 may be configured to be connected to a communication network, and the program codes may be supplied through the communication network. The communication network is not particularly limited. For example, Internet, Intranet, Extranet, LAN, ISDN, VAN, CATV communication network, virtual private network, a telephone network, a mobile communication network, a satellite communication network, and the like can be used. Further, a transmission medium constituting the communication network is not particularly limited. For example, a wire system, such as IEEE 1394, a USB, power line transfer, a cable TV line, a telephone line, or an ADSL line, or a wireless system, such as infrared rays of IrDA or a remote control, Bluetooth (Registered Trademark), 802.11 wireless, HDR, a cellular phone network, a satellite line, or a terrestrial digital network, can be used. Moreover, the invention can be realized in forms of a computer data signal embedded in carrier waves which are implemented by electronic transmission of the program codes.

According to the invention, in the security system using wireless communication, the information communication between the electrical apparatus and the main controller can be smoothly performed, and the electrical apparatus can be reliably controlled. Therefore, the invention can be suitably applied to a field of a home security in which various appliances are operated remotely from the cellular phone and, when an outsider intrudes into the management region, the outsider is threatened by the corresponding appliance.

According to the invention, in the security system using wireless communication, the information communication between the management system connected to the VPN and the cellular phone that is connectable to Internet is possible, and the monitoring and/or the remote control of the management system can be performed from the cellular phone. Therefore, the invention can be suitably applied to a field of a home security in which various appliances are operated remotely from the cellular phone and, when an outsider intrudes into the management region, the notice reporting the intrusion is sent to the cellular phone.

## Claims

1. A communication relay apparatus for relaying a communication between a communication terminal and at least one specific network in which a communication using an independently set dedicated address is performed, said communication relay apparatus comprising:
a communication section for performing data communication with the communication terminal;
a network connecting section for performing data communication with a specific network terminal that belongs to the specific network; and
a communication relay processing section,
wherein when the communication section receives an instruction to transmit data to the specific network terminal, the communication relay processing section controls the network connecting section to transmit a content of the instruction to the specific network terminal through the specific network, and
the communication relay processing section controls the communication section to transmit information to the communication terminal, the information being received by the network connecting section from the specific network terminal.

2. The communication relay apparatus according to claim 1,
wherein the specific network is a VPN (virtual private network), and
the network connecting section is a VPN connecting section being connected to the VPN.

3. The communication relay apparatus according to claim 1 or 2, further comprising:
a storage for storing the dedicated address in association with identification information of the communication terminal which is connectable to the dedicated address.

4. The communication relay apparatus according to claim 1, 2, or 3,
wherein the communication section performs the data communication with the communication terminal by using a first communication protocol,
the network connecting section performs the data communication with the specific network terminal by using a second communication protocol which is different from the first communication protocol, and
the communication relay apparatus further comprising:
a protocol converting section for performing a protocol conversion between the first communication protocol and the second communication protocol.

5. The communication relay apparatus according to claim 4,
wherein the first communication protocol is HTTP (HyperText Transfer Protocol).

6. A communication system comprising:
the communication relay apparatus according to claim 1; and
a main controller as the specific network terminal, the main controller controlling a management system that controls at least one electrical apparatus installed in a predetermined region,
wherein the communication relay apparatus and the main controller are connected to each other through the specific network in which the communication using the dedicated address is performed.

7. A communication control method comprising:
performing data communication with a communication terminal;
performing data communication with a specific network terminal that belongs to a specific network in which communication using an independently set dedicated address is performed;
when a data transmission instruction to transmit data to the specific network terminal is received, transmitting a content of the data transmission instruction to the specific network terminal through the specific network; and
transmitting information received from the specific network terminal to the communication terminal.

8. A computer readable medium having a program including instructions for permitting a computer to perform communication relay, said instructions comprising:
performing data communication with a communication terminal;
performing data communication with a specific network terminal that belongs to a specific network in which communication using an independently set dedicated address is performed;
when a data transmission instruction to transmit data to the specific network terminal is received, transmitting a content of the data transmission instruction to the specific network terminal through the specific network; and
transmitting information received from the specific network terminal to the communication terminal.
